(19) Europäisches Patentamt / European Patent Office / Office européen des brevets

(11) **EP 2 655 554 B1**

(12) **FASCICULE DE BREVET EUROPEEN**

(45) Date de publication et mention de la délivrance du brevet:
**27.07.2016 Bulletin 2016/30**

(21) Numéro de dépôt: **11808891.3**

(22) Date de dépôt: **15.12.2011**

(51) Int Cl.:
$C10G\ 3/00^{(2006.01)}$    $B01J\ 27/185^{(2006.01)}$
$B01J\ 35/10^{(2006.01)}$    $C10G\ 47/12^{(2006.01)}$
$B01J\ 27/186^{(2006.01)}$    $B01J\ 37/16^{(2006.01)}$
$C10G\ 65/12^{(2006.01)}$    $B01J\ 27/19^{(2006.01)}$
$B01J\ 23/847^{(2006.01)}$    $B01J\ 27/199^{(2006.01)}$
$B01J\ 23/888^{(2006.01)}$    $B01J\ 32/00^{(2006.01)}$
$B01J\ 37/10^{(2006.01)}$    $B01J\ 37/20^{(2006.01)}$
$B01J\ 29/04^{(2006.01)}$    $B01J\ 35/00^{(2006.01)}$

(86) Numéro de dépôt international:
**PCT/FR2011/000651**

(87) Numéro de publication internationale:
**WO 2012/085352 (28.06.2012 Gazette 2012/26)**

(54) **PROCEDE D'HYDROCRAQUAGE DE COUPES HYDROCARBONNEES UTILISANT UN CATALYSEUR A BASE D'HETEROPOLYANIONS PIEGES DANS UN SUPPORT OXYDE MESOSTRUCTURE**

VERFAHREN ZUM HYDROCRACKEN VON KOHLENWASSERSTOFFFRAKTIONEN MIT EINEM KATALYSATOR AUF DER BASIS VON IN EINEM MESOSTRUKTURIERTEN OXIDTRÄGER EINGESCHLOSSENEN HETEROPOLYANIONEN

METHOD FOR THE HYDROCRACKING OF HYDROCARBON FRACTIONS USING A CATALYST BASED ON HETEROPOLYANIONS TRAPPED IN A MESOSTRUCTURED OXIDE SUPPORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1005022**

(43) Date de publication de la demande:
**30.10.2013 Bulletin 2013/44**

(73) Titulaires:
• **IFP Énergies nouvelles**
**92852 Rueil-Malmaison Cedex (FR)**
• **CNRS**
**75794 Paris Cedex 16 (FR)**

(72) Inventeurs:
• **MARCHAND, Karin**
**80802 München (DE)**
• **CHAUMONNOT, Alexandra**
**F-69008 Lyon (FR)**
• **BONDUELLE, Audrey**
**F-69340 Francheville (FR)**
• **DUFAUD, Véronique**
**F-69100 Villeurbanne (FR)**
• **LEFEBVRE, Frédéric**
**F-38270 Beaufort (FR)**
• **BADER, Manuela**
**F-35200 Rennes (FR)**
• **LOPES SILVA, Susana**
**F-69007 Lyon (FR)**

(56) Documents cités:
**FR-A1- 2 931 705    FR-A1- 2 935 139**

• **J-W ZHAO ET AL: "A Combination of Lacunary Polyoxometalates and High-Nuclear Transition-Metal Clusters under Hydrothermal Conditions. Parts II: From Double Cluster, Dimer, and Tetramer to Three-Dimensional Frameworks", CHEMISTRY - A EUROPEAN JOURNAL, WILEY - V C H VERLAG GMBH & CO. KGAA, WEINHEIM, DE, vol. 13, no. 36, 17 décembre 2007 (2007-12-17), pages 10030-10045, XP002525499, ISSN: 0947-6539, DOI: DOI:10.1002/CHEM.200701331 [extrait le 2007-11-23]**

**Description**

L'invention concerne les procédés d'hydrocraquage de charges hydrocarbonées dont au moins 50% poids des composés présentent un point d'ébullition initial supérieur à 340°C et un point d'ébullition final inférieur à 540°C. De préférence, la charge hydrocarbonée mise en oeuvre dans le procédé selon l'invention est une charge de type de type distillat sous vide (DSV).

L'objectif du procédé selon l'invention est essentiellement la production de distillats moyens correspondant aux coupes kérosène et gazole, c'est-à-dire aux coupes ayant un point d'ébullition initial d'au moins 150°C et un point d'ébullition final d'au plus 370°C, et de préférence d'au plus 340°C.

État de la technique antérieure

L'hydrocraquage de coupes pétrolières lourdes est un procédé très important du raffinage qui permet de produire, à partir de charges lourdes excédentaires et peu valorisables, des fractions plus légères telles que des essences, des kérosènes et des gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, kérosène et gazole, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

La composition et l'utilisation des catalyseurs d'hydrotraitement et d'hydrocraquage de charges hydrocarbonées sont respectivement bien décrits dans l'ouvrage "Hydrocracking Science and Technology", 1996, J. Scherzer, A. J. Gruia, Marcel Dekker Inc et dans l'article de B. S. Clausen, H. T. Topsøe, F. E. Massoth, issu de l'ouvrage "Catalysis Science and Technology", 1996, volume 11, Springer-Verlag. Ainsi, les catalyseurs utilisés dans les procédés d'hydrocraquage, qu'ils soient destinés aux réactions d'hydrotraitement ou d'hydrocraquage, se caractérisent généralement par une fonction hydro-déshydrogénante apportée par la présence d'une phase active à base d'au moins un métal du groupe VIB et/ou au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique (valable spécifiquement pour les catalyseurs d'hydrotraitement) ou bien à l'état supporté mettant alors en jeu un solide poreux de nature différente. Dans ce dernier cas, le support poreux est généralement un oxyde amorphe ou mal cristallisé (alumine, aluminosilicate, etc.) éventuellement associé à un matériau zéolithique ou non. Après préparation, au moins un métal du groupe VIB et/ou au moins un métal du groupe VIII constitutif(s) desdits catalyseurs se présente(nt) souvent sous forme d'oxyde. La forme active et stable pour les procédés d'hydrocraquage et d'hydrotraitement étant la forme sulfurée, ces catalyseurs doivent subir une étape de sulfuration. Celle-ci peut être réalisée dans l'unité du procédé associé (on parle alors de sulfuration in-situ) ou préalablement au chargement du catalyseur dans l'unité (on parle alors de sulfuration ex-situ).

Dans le cas particulier des catalyseurs d'hydrocraquage, ceux-ci sont tous du type bifonctionnel associant une fonction acide à la fonction hydro-déshydrogénante décrite ci-dessus. La fonction acide est apportée par des supports dont les surfaces varient généralement de 150 à 800 $m^2.g^{-1}$ et présentant une acidité superficielle, tels que les alumines halogénées (chlorées ou fluorées notamment), les combinaisons d'oxydes de bore et d'aluminium, les aluminosilicates mésoporeux amorphes ou cristallisés et les zéolithes. L'équilibre entre les deux fonctions acide et hydro-déshydrogénante est un des paramètres qui régit l'activité et la sélectivité des catalyseurs d'hydrocraquage. Une fonction acide faible et une fonction hydro-déshydrogénante forte donnent des catalyseurs peu actifs, travaillant à une température en général élevée et de préférence supérieure ou égale à 390 ou 400°C et avec une vitesse spatiale d'alimentation faible ou VVH, exprimée en volume de charge à traiter par unité de volume de catalyseur et par heure) faible et de préférence inférieure ou égale à 2, mais dotés d'une très bonne sélectivité en distillats moyens. Inversement, une fonction acide forte et une fonction hydro-déshydrogénante faible donnent des catalyseurs actifs, mais présentant de moins bonnes sélectivités en distillats moyens (kérosène et gazole). Un type de catalyseurs conventionnels d'hydrocraquage est à base de supports amorphes modérément acides, tels les aluminosilicates mésoporeux par exemple. Ces systèmes sont utilisés pour produire des distillats moyens de bonne qualité et, éventuellement, des bases huiles. Ces catalyseurs sont par exemple utilisés dans les procédés en une étape.

Il est généralement connu de l'Homme du métier que de bonnes performances catalytiques dans les domaines d'application mentionnés ci-dessus sont fonction 1) de la nature de la charge hydrocarbonée à traiter, 2) du procédé employé, 3) des conditions opératoires de fonctionnement choisies et 4) du catalyseur utilisé. Dans ce dernier cas, il est également admis qu'un catalyseur présentant un fort potentiel catalytique se caractérise 1) par une fonction hydro-déshydrogénante optimisée (phase active associée parfaitement dispersée à la surface du support et présentant une teneur en métal élevée) et 2) dans le cas particulier des procédés mettant en jeu des réactions d'hydrocraquage, par un bon équilibre entre ladite fonction hydro-déshydrogénante et la fonction craquante comme mentionné ci-dessus. Notons également que, idéalement, quelle que soit la nature de la charge hydrocarbonée à traiter, le catalyseur doit pouvoir présenter une accessibilité des sites actifs vis-à-vis des réactifs et produits de réactions tout en développant une surface active élevée, ce qui conduit à des contraintes spécifiques en terme de structure et de texture propres au support oxyde constitutif desdits catalyseurs. FR 2 935 139 décrét un procédé d'hydrocraquage.

Les méthodes usuelles conduisant à la formation de la phase hydro-déshydrogénante des catalyseurs d'hydrotraitement et d'hydrocraquage consistent en un dépôt de précurseur(s) moléculaire(s) d'au moins un métal du groupe VIB et/ou au moins un métal du groupe VIII sur un support oxyde par la technique dite "d'imprégnation à sec" suivi des étapes de maturation, séchage et calcination conduisant à la formation de la forme oxydée du(des)dit(s) métal(aux) employé(s). Vient ensuite l'étape finale de sulfuration génératrice de la phase active hydro-déshydrogénante comme mentionné ci-dessus.

Les performances catalytiques de catalyseurs issus de ces protocoles de synthèse "conventionnels" ont largement été étudiées. En particulier, il a été montré que, pour des teneurs en métal relativement élevées, des phases réfractaires à la sulfuration formées consécutivement à l'étape de calcination (phénomène de frittage) apparaissent (B. S. Clausen, H. T. Topsøe, et F. E. Massoth, issu de l'ouvrage "Catalysis Science and Technology", 1996, volume 11, Springer-Verlag). Par exemple, dans le cas des catalyseurs de type CoMo ou NiMo supportés sur un support de nature aluminique, il s'agit 1) de cristallites de $MoO_3$, $NiO$, $CoO$, $CoMoO_4$ ou $Co_3O_4$, de taille suffisante pour être détectés en DRX, et/ou 2) des espèces du type $Al_2(MoO_4)_3$, $CoAl_2O_4$ ou $NiAl_2O_4$. Les trois espèces précitées contenant l'élément aluminium sont bien connues de l'Homme du métier. Elles résultent de l'interaction entre le support aluminique et les sels précurseurs en solution de la phase active hydro-déshydrogénante, ce qui se traduit concrètement par une réaction entre des ions $Al^{3+}$ extraits de la matrice aluminique et lesdits sels pour former des hétéropolyanions d'Anderson de formule $[Al(OH)_6Mo_6O_{18}]^{3-}$, eux-mêmes précurseurs des phases réfractaires à la sulfuration. La présence de l'ensemble de ces espèces conduit à une perte indirecte non négligeable de l'activité catalytique du catalyseur associé car la totalité des éléments appartenant au moins à un métal du groupe VIB et/ou au moins un métal du groupe VIII n'est pas utilisée au maximum de son potentiel puisque une partie de ceux-ci est immobilisée dans des espèces peu ou non actives.

Les performances catalytiques des catalyseurs conventionnels décrits ci-dessus pourraient donc être améliorées, notamment en développant de nouvelles méthodes de préparation de ces catalyseurs qui permettraient :

1) d'assurer une bonne dispersion de la phase hydro-déshydrogénante, en particulier pour des teneurs en métal élevées (par exemple par contrôle de la taille des particules à base de métaux de transition, maintien des propriétés de ces particules après traitement thermique, etc.),

2) de limiter la formation des espèces réfractaires à la sulfuration (par exemple par l'obtention d'une meilleure synergie entre les métaux de transition constitutifs de la phase active, contrôle des interactions entre la phase active hydro-déshydrogénante (et/ou ses précurseurs) et le support poreux employé, etc.),

3) d'assurer une bonne diffusion des réactifs et des produits des réactions tout en maintenant des surfaces actives développées élevées (optimisation des propriétés chimiques, texturales et structurales du support poreux).

Les travaux de recherche de la demanderesse l'ont donc conduit à préparer des catalyseurs d'hydrocraquage en modifiant la composition chimique et structurale des espèces métalliques précurseurs des phases actives et ainsi en modifiant les interactions entre le support et la phase active du catalyseur et/ou ses précurseurs oxydes. En particulier, les travaux de la demanderesse l'ont conduit à utiliser des polyoxométallates dont la formule est explicitée ci-dessous comme précurseurs oxydes particuliers de la phase active des catalyseurs utilisés dans le procédé d'hydrocraquage de charges hydrocarbonées selon l'invention.

Par ailleurs, le support oxyde du catalyseur jouant un rôle non négligeable dans le développement de catalyseurs d'hydrocraquage performants dans la mesure où il va induire des modifications des interactions entre le support et la phase active dudit catalyseur et/ou ses précurseurs oxydes, la demanderesse a également dirigé ses travaux de recherche vers la préparation de catalyseurs d'hydrocraquage utilisant des supports oxydes présentant des propriétés texturales particulières.

La demanderesse a donc mis en évidence qu'un catalyseur comprenant, sous sa forme oxyde, au moins un précurseur de phase active sous forme d'au moins un polyoxométallate de formule $(H_hX_xM_mO_y)^{q-}$ explicitée ci-dessous, piégé au sein même d'une matrice oxyde mésostructurée servant de support, présentait une activité catalytique améliorée par rapport à des catalyseurs préparés à partir de précurseurs standard ne contenant pas de polyoxométallates, ledit catalyseur étant sulfuré puis mis en oeuvre dans un procédé d'hydrocraquage d'au moins une charge hydrocarbonée dont les composés présentent des points d'ébullition compris entre 340°C et 540°C.

Un objectif de la présente invention est de fournir un procédé d'hydrocraquage d'au moins une charge hydrocarbonée dont au moins 50% poids des composés présentent un point d'ébullition initial supérieur à 340°C et un point d'ébullition final inférieur à 540°C et en particulier d'une charge de type distillat sous vide, mettant en oeuvre un catalyseur présentant des performances catalytiques améliorées.

Résumé de l'invention

L'invention concerne un procédé d'hydrocraquage d'au moins une charge hydrocarbonée dont au moins 50% poids des composés présentent un point d'ébullition initial supérieur à 340°C et un point d'ébullition final inférieur à 540°C, mettant en oeuvre un catalyseur comprenant, sous sa forme oxyde, au moins un métal choisi parmi les métaux du groupe VIB, les métaux du groupe VIII et les métaux du groupe VB de la classification périodique, pris seuls ou en mélange, lesdits métaux étant présents sous forme d'au moins un polyoxométallate de formule $(H_hX_xM_mO_y)^{q-}$ dans laquelle X est un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), O est l'oxygène, H est l'hydrogène, h est un entier compris entre 0 et 12, x est un entier compris entre 0 et 4, m est un entier égal à 5, 6, 7, 8, 9, 10, 11, 12 et 18, y est un entier compris entre 17 et 72 et q est un entier compris entre 1 et 20, lesdits polyoxométallates étant présents au sein d'une matrice mésostructurée à base d'oxyde d'au moins un élément Y choisi dans le groupe constitué par le silicium, l'aluminium, le titane, le zirconium, le gallium, et le cérium et le mélange d'au moins un de ces éléments, ladite matrice ayant une taille de pore comprise entre 1,5 et 50 nm et présentant des parois amorphes d'épaisseur comprise entre 1 et 30 nm, ledit catalyseur étant sulfuré avant d'être mis en oeuvre dans ledit procédé selon la revendication 1.

Intérêt de l'invention

Un des avantages de la présente invention réside dans la mise en oeuvre, dans un procédé d'hydrocraquage d'au moins une charge hydrocarbonée dont au moins 50% poids des composés présentent un point d'ébullition initial supérieur à 340°C et un point d'ébullition final inférieur à 540°C, d'un catalyseur présentant simultanément les propriétés catalytiques propres à la présence de polyoxométallates et les propriétés texturales et de surface d'une matrice oxyde mésostructurée dans laquelle sont piégés lesdits polyoxométallates. Il en résulte des propriétés et des interactions innovantes entre lesdits polyoxométallates et le réseau inorganique mésostructuré de ladite matrice. Ces interactions se traduisent par une conversion des produits bouillant à une température supérieure à 340°C en produits bouillant à une température inférieure à 340°C accrue et/ou en une hydrodésulfuration (HDS), une hydrodéazotation (HDN) et une hydrodémétallation (HDM) accrues. Ceci est dû en particulier à une meilleure dispersion de la phase active grâce à l'utilisation d'une matrice oxyde mésostructurée dans laquelle sont piégés les polyoxométallates.

Exposé de l'invention

Charges

Des charges très variées peuvent être traitées par les procédés d'hydrocraquage selon l'invention. La charge mise en oeuvre dans le procédé d'hydrocraquage selon l'invention est une charge hydrocarbonée dont au moins 50% poids des composés présentent un point d'ébullition initial supérieur à 340°C et un point d'ébullition final inférieur à 540°C, de préférence dont au moins 60% poids, de manière préférée dont au moins 75% poids et de manière plus préférée dont au moins 80% poids des composés présentent un point d'ébullition initial supérieur à 340°C et un point d'ébullition final inférieur à 540°C.

Ladite charge hydrocarbonée est avantageusement choisie parmi les distillats sous vide ou DSV, les effluents issus d'une unité de craquage catalytique FCC (Fluid Catalytic Cracking), les gazoles légers issus d'une unité de craquage catalytique (ou LCO pour Light Cycle Oil selon la terminologie anglo-saxonne), les huiles de coupe lourde (HCO pour Heavy Cycle Oil selon la terminologie anglo-saxonne), les effluents paraffiniques issus de la synthèse Fischer Tropsch, les effluents issus de la distillation sous vide, tels que par exemple les fractions gazoles de type VGO (Vacuum Gas Oil), les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, pris seuls ou en mélange.

De préférence, ladite charge hydrocarbonée est une coupe distillat sous vide. La coupe distillat sous vide est généralement issue de la distillation sous vide du pétrole brut. Ladite coupe distillat sous vide comprend des composés aromatiques, des composés oléfiniques, des composés naphténiques et/ou des composés paraffiniques.

Ladite coupe distillat sous vide comprend avantageusement des hétéroatomes choisis parmi l'azote, le soufre et le mélange de ces deux éléments. Lorsque l'azote est présent dans ladite charge à traiter, la teneur en azote est supérieure ou égale à 500 ppm, de préférence ladite teneur est comprise entre 500 et 10000 ppm poids, de manière plus préférée entre 700 et 4000 ppm poids et de manière encore plus préférée entre 1000 et 4000 ppm. Lorsque le soufre est présent dans ladite charge à traiter, la teneur en soufre est comprise entre 0,01 et 5% poids, de manière préférée comprise entre 0,2 et 4% poids et de manière encore plus préférée entre 0,5 et 3% poids.

Ladite coupe distillat sous vide peut éventuellement avantageusement contenir des métaux, en particulier du nickel et du vanadium. La teneur cumulée en nickel et vanadium de ladite coupe distillat sous vide est de préférence inférieure à 1 ppm poids. La teneur en asphaltènes de ladite charge hydrocarbonée est généralement inférieure à 3000 ppm, de manière préférée inférieure à 1000 ppm, de manière encore plus préférée inférieure à 200 ppm.

Dans un mode de réalisation préféré, ladite charge hydrocarbonée de type distillat sous vide ou DSV peut être utilisée telle quelle, c'est-à-dire seule ou en mélange avec d'autres coupes hydrocarbonées, de préférence choisies parmi les effluents issus d'une unité de craquage catalytique FCC (Fluid Catalytic Cracking), les gazoles légers issus d'une unité de craquage catalytique (ou LCO pour Light Cycle Oil selon la terminologie anglo-saxonne), les huiles de coupe lourde (HCO pour Heavy Cycle Oil selon la terminologie anglo-saxonne), les résidus atmosphériques et de résidus sous vide issus de la distillation atmosphérique et sous vide du pétrole brut, les effluents paraffiniques issus de la synthèse Fischer Tropsch, les effluents issus de la distillation sous vide, tels que par exemple les fractions gazoles de type VGO (Vacuum Gas Oil selon la terminologie anglo-saxonne), les huiles désalphaltées ou DAO (Deasphalted Oil selon la terminologie anglo-saxonne), les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, prises seules ou en mélange.

Dans le cas préféré ou ladite charge hydrocarbonée de type distillat sous vide ou DSV est utilisée en mélange avec d'autres coupes hydrocarbonées, lesdites coupes hydrocarbonées ajoutées seules ou en mélange, sont présentent à au plus 50% poids dudit mélange, de préférence à au plus 40% poids, de manière préférée à au plus 30% poids et de manière plus préférée à au plus 20% poids dudit mélange.

Selon l'invention, le catalyseur utilisé dans ledit procédé d'hydrocraquage d'au moins ladite charge hydrocarbonée comprend sous sa forme oxyde, c'est à dire avant d'avoir subi une étape de sulfuration générant la phase active sulfurée, au moins un métal choisi parmi les métaux du groupe VIB, les métaux du groupe VIII et les métaux du groupe VB de la classification périodique, pris seuls ou en mélange, lesdits métaux étant présents sous forme d'au moins un polyoxométallate de formule $(H_hX_xM_mO_y)^{q-}$ explicitée ci-dessus, lesdits polyoxométallates étant présents au sein d'une matrice oxyde mésostructurée.

Plus précisément, lesdits polyoxométallates présents au sein de ladite matrice sont piégés dans les parois de ladite matrice. Lesdits polyoxométallates ne sont donc pas simplement déposés par exemple par imprégnation à la surface des pores de ladite matrice mais sont localisés au sein même des parois de ladite matrice.

La localisation particulière desdits polyoxométallates au sein même des parois de ladite matrice oxyde mésostructurée permet une meilleure interaction entre ladite matrice servant de support et la phase active et/ou ses précurseurs oxydes comprenant lesdits polyoxométallates. Il en résulte également une amélioration du maintien des propriétés texturales et structurales des matrices oxydes mésostructurées, une amélioration du maintien de la structure dudit polyoxométallate et de préférence dudit hétéropolyanion après post-traitement du solide final, ainsi qu'une amélioration de la dispersion, de la résistance thermique et de la résistance chimique dudit polyoxométallate.

Par abus de langage et dans toute la suite du texte, nous définissons les polyoxométallates utilisés selon l'invention, comme étant les composés répondant à la formule $(H_hX_xM_mO_y)^{q-}$ dans laquelle X est un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), O est l'oxygène, H est l'hydrogène, h est un entier compris entre 0 et 12, x est un entier compris entre 0 et 4, m est un entier égal à 5, 6. 7, 8, 9, 10, 11, 12 et 18, y est un entier compris entre 17 et 72 et q est un entier compris entre 1 et 20.

De préférence, l'élément M ne peut pas être un atome de nickel ou un atome de cobalt seul.

Les polyoxométallates définis selon l'invention englobent deux familles de composés, les isopolyanions et les hétéropolyanions. Ces deux familles de composés sont définies dans l'article Heteropoly and Isopoly Oxométallates, Pope, Ed Springer-Verlag, 1983.

Les isopolyanions qui peuvent être utilisés dans la présente invention sont des polyoxométallates de formule générale $(H_hX_xM_mO_y)^{q-}$ dans laquelle x = 0, les autres éléments ayant la signification précitée.

De préférence, les m atomes M desdits isopolyanions sont soit uniquement des atomes de molybdène, soit uniquement des atomes de tungstène, soit uniquement des atomes du groupe VB choisis parmi le vanadium (V), le niobium (Nb) et le tantale (Ta), soit un mélange d'atome de molybdène et de vanadium (MoV), soit un mélange d'atome de niobium et de tungstène (NbW).

Les m atomes M desdits isopolyanions peuvent également avantageusement être soit un mélange d'atomes de nickel, de molybdène et de tungstène soit un mélange d'atomes de cobalt, de molybdène et de tungstène.

De préférence, dans le cas où l'élément M est le Molybdène (Mo), m est égal à 7. De même, de préférence, dans le cas où l'élément M est le tungstène (W), m est égal à 12.

Les isopolyanions $Mo_7O_{24}^{6-}$ et $H_2W_{12}O_{40}^{6-}$ sont avantageusement utilisés comme précurseurs de phase active dans le cadre de l'invention.

Lesdits isopolyanions se forment avantageusement par réaction des oxoanions de type $MO_4^{2-}$ entre eux. Par exemple, les composés molybdiques sont bien connus pour ce genre de réactions, puisque selon le pH, le composé molybdique en solution peut se présenter sous la forme $MoO_4^{2-}$ ou sous la forme d'un isopolyanion de formule $Mo_7O_{24}^{6-}$ qui est obtenu selon la réaction : $7\ MoO_4^{2-} + 8\ H^+ \rightarrow Mo_7O_{24}^{6-} + 4\ H_2O$. Dans le cas des isopolyanions dans lesquels M est un atome de tungstène, l'acidification potentielle du milieu réactionnel, en provoquant la formation de tungstates $WO_4^{2-}$, peut conduire à générer l'$\alpha$-métatungstate, 12 fois condensé selon la réaction suivante : $12\ WO_4^{2-} + 18\ H^+ \rightarrow H_2W_{12}O_{40}^{6-} + 8\ H_2O$.

Les hétéropolyanions qui peuvent être utilisés dans la présente invention sont des polyoxométallates de formule $(H_hX_xM_mO_y)^{q-}$ dans laquelle x = 1, 2, 3 ou 4, les autres éléments ayant la signification précitée.

Les hétéropolyanions présentent généralement une structure dans laquelle l'élément X est l'atome "central" et l'élément M est un atome métallique pratiquement systématiquement en coordination octaédrique avec X ≠ M.

De préférence, les m atomes M sont soit uniquement des atomes de molybdène, soit uniquement des atomes de tungstène, (soit uniquement des atomes du groupe VB choisis parmi le vanadium (V), le niobium (Nb) et le tantale (Ta), soit un mélange d'atomes de molybdène et de cobalt (CoMo), soit un mélange de molybdène et de nickel (NiMo), soit un mélange d'atomes de tungstène et de molybdène (MoW), soit un mélange d'atomes de tungstène et de nickel (NiW). De manière préférée, les m atomes M sont soit uniquement des atomes de molybdène, soit un mélange d'atomes de molybdène et de cobalt, soit un soit un mélange de molybdène et de nickel (NiMo). De préférence, les m atomes M ne peuvent pas être uniquement des atomes de nickel, ni uniquement des atomes de cobalt.

Parmi les m atomes M desdits hétéropolyanions, les éléments du groupe VIII se substituent partiellement aux éléments du groupe VIB et/ou aux éléments du groupe VB.

En particulier, dans le cas où les m atomes M sont soit un mélange d'atomes de molybdène et de cobalt, soit un mélange de molybdène et de nickel, soit un mélange d'atomes de tungstène et de cobalt, soit un mélange d'atomes de tungstène et de nickel, les atomes de cobalt et de nickel se substituent partiellement aux atomes de molybdène et de tungstène et de manière préférée aux atomes de molybdène.

De préférence, l'élément X est au moins un atome de phosphore.

Les hétéropolyanions sont avantageusement obtenus par polycondensation d'oxoanions de type $MO_4^{2-}$, dans le cas où M est un atome de molybdène ou de tungstène; autour d'un ou plusieurs oxoanion(s) de type $XO_4^{q-}$ dans lequel la charge q est dictée par la règle de l'octet et la position de l'élément X dans la classification périodique. Il y a alors élimination de molécules d'eau et création de ponts oxo entre les atomes. Ces réactions de condensation sont régies par différents facteurs expérimentaux comme le pH, la concentration des espèces en solution, la nature du solvant, et le rapport m/x étant le rapport du nombre d'atomes d'élément M sur le nombre d'atomes d'élément X.

Les hétéropolyanions sont des espèces polyoxométallates chargées négativement. Pour compenser ces charges négatives, il est nécessaire d'introduire des contre-ions et plus particulièrement des cations. Ces cations peuvent avantageusement être des protons $H^+$, ou tout autre cation de type $NH_4^+$ ou des cations métalliques et en particulier des cations métalliques de métaux du groupe VIII.

Dans le cas où les contre-ions sont des protons, la structure moléculaire comprenant l'hétéropolyanion et au moins un proton constitue un hétéropolyacide. Les hétéropolyacides qui peuvent être utilisés comme précurseurs de phase active dans la présente invention peuvent être à titre d'exemple l'acide phosphomolybdique ($3H^+$, $PMo_{12}O_{40}^{3-}$) ou encore l'acide phosphotungstique ($3H^+$, $PW_{12}O_{40}^{3-}$).

Dans le cas où les contre-ions ne sont pas des protons, on parle alors de sel d'hétéropolyanion pour désigner cette structure moléculaire. On peut alors avantageusement tirer profit de l'association au sein de la même structure moléculaire, via l'emploi d'un sel d'hétéropolyanion, du métal M et de son promoteur, c'est à dire de l'élément cobalt et/ou de l'élément nickel qui peut soit être en position X au sein de la structure de l'hétéropolyanion, soit en substitution partielle d'au moins un atome M de molybdène et/ou de tungstène au sein de la structure de l'hétéropolyanion soit en position de contre-ion.

De préférence, les polyoxométallates utilisés selon l'invention, sont les composés répondant à la formule $(H_hX_xM_mO_y)^{q-}$ dans laquelle X est un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), O est l'oxygène, H est l'hydrogène, h est un entier compris entre 0 et 6, x est un entier pouvant être égal à 0, 1 ou 2, m est un entier égal à 5, 6, 7, 9, 10, 11 et 12, y est un entier compris entre 17 et 48 et q est un entier compris entre 3 et 12.

Selon le type de catalyseur désiré, de manière non exhaustive et à titre d'exemple, des polyoxométallates combinant au sein de leur structure une phase active à base de cobalt et de molybdène (systèmes CoMo), de nickel et de molybdène (systèmes NiMo), de nickel et de tungstène (NiW), de molybdène et vanadium (système MoV), de nickel, molybdène et vanadium (systèmes NiMoV), de phosphore et de molybdène (PMo), de silicium et de molybdène (SiMo), peuvent avantageusement être utilisés.

De manière plus préférée, les polyoxométallates utilisés selon l'invention, sont les composés répondant à la formule $(H_hX_xM_mO_y)^{q-}$ dans laquelle h est un entier égal à 0, 1, 4 ou 6, x est un entier égal à 0, 1 ou 2, m est un entier égal à 5, 6, 10 ou 12, y est un entier égal à 23, 24, 38 ou 40 et q est un entier égal à 3, 4, 5, 6, 7 et 8, X, M, H et O ayant la signification précitée.

Les polyoxométallates préférés utilisés selon l'invention sont avantageusement choisis parmi les polyoxométallates de formule $PVMo_{11}O_{40}^{4-}$, $PV_2Mo_{10}O_{40}^{5-}$, $PV_3Mo_9O_{40}^{6-}$ et $PV_4Mo_8O_{40}^{7-}$, $HPNiMo_{11}O_{40}^{6-}$, $P_2Mo_5O_{23}^{6-}$, $Ni_2Mo_{10}O_{38}H_4^{8-}$, $NiMo_6O_{24}H_6^{4-}$, $PMo_{12}O_{40}^{3-}$, $PW_{12}O_{40}^{3-}$ et $PMo_{(11-z)}W_zO_{40}^{3-}$ avec z étant compris entre 1 et 11. Les polyoxométallates plus préférés utilisés selon l'invention sont avantageusement choisis parmi les polyoxométallates de formule $PVMo_{11}O_{40}^{4-}$, $PV_2Mo_{10}O_{40}^{5-}$, $PV_3Mo_9O_{40}^{6-}$ et $PV_4Mo_8O_{40}^{7-}$, $HPNiMo_{11}O_{40}^{6-}$, $P_2Mo_5O_{23}^{6-}$, $Ni_2Mo_{10}O_{38}H_4^{8-}$, $NiMo_6O_{24}H_6^{4-}$, $PMo_{12}O_{40}^{3-}$, $PW_{12}O_{40}^{3-}$ et $PMo_3W_9O_{40}^{3-}$, $PMo_6W_6O_{40}^{3-}$, pris seuls ou en mélange.

Les polyoxométallates préférés qui peuvent avantageusement être utilisés comme précurseurs de phase active du catalyseur mis en oeuvre dans le procédé selon l'invention sont les hétéropolyanions dits d'Anderson de formule générale $XM_6O_{24}^{q-}$ pour lesquels le rapport m/x est égal à 6 et dans laquelle les éléments X et M et la charge q ont la signification précitée. L'éléments X est donc un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), et q est un entier compris entre 1 et 20 et de préférence compris entre 3 et 12.

La structure particulière desdits hétéropolyanions dits d'Anderson est décrite dans l'article Nature, 1937, 150, 850. La structure desdits hétéropolyanions dits d'Anderson comprend 7 octaèdres situés dans un même plan et reliés entre eux par les arêtes : sur les 7 octaèdres, 6 octaèdres entourent l'octaèdre central contenant l'élément X. Les hétéropolyanions d'Anderson contenant au sein de leur structure du cobalt et du molybdène ou du nickel et du molybdène sont préférés. Les hétéropolyanions d'Anderson de formule $CoMo_6O_{24}H_6^{3-}$ et $NiMo_6O_{24}H_6^{4-}$ sont particulièrement préférés. Conformément à la formule, dans ces hétéropolyanions d'Anderson, les atomes de cobalt et de nickel sont respectivement les hétéroéléments X de la structure.

En effet, lesdits hétéropolyanions combinent dans la même structure le molybdène et le cobalt ou le molybdène et le nickel. En particulier, ceux-ci permettent, lorsqu'ils sont sous forme de sels de cobalt ou de sels de nickel, d'atteindre un rapport atomique dudit promoteur sur le métal M et en particulier un rapport atomique (Co et/ou Ni)/Mo compris entre 0,4 et 0,6. Ce rapport dudit promoteur (Co et/ou Ni)/Mo compris entre 0,4 et 0,6 est particulièrement préféré pour maximiser les performances des catalyseurs d'hydrotraitement et en particulier d'hydrodésulfuration mis en oeuvre dans le procédé selon l'invention.

Dans le cas où l'hétéropolyanion d'Anderson contient au sein de sa structure du cobalt et du molybdène, un mélange des deux formes monomérique de formule $CoMo_6O_{24}H_6^{3-}$ et dimérique de formule $Co_2Mo_{10}O_{38}H_4^{6-}$ dudit hétéropolyanion, les deux formes étant en équilibre, peut avantageusement être utilisé. Dans le cas où l'hétéropolyanion d'Anderson contient au sein de sa structure du cobalt et du molybdène, ledit hétéropolyanion d'Anderson est de manière préférée dimérique de formule $Co_2Mo_{10}O_{38}H_4^{6-}$

Dans le cas où l'hétéropolyanion d'Anderson contient au sein de sa structure du nickel et du molybdène, un mélange des deux formes monomérique de formule $NiMo_6O_{24}H_6^{4-}$ et dimérique de formule $Ni_2Mo_{10}O_{38}H_4^{8-}$ dudit hétéropolyanion, les deux formes étant en équilibre, peut avantageusement être utilisé. Dans le cas où l'hétéropolyanion d'Anderson contient au sein de sa structure du nickel et du molybdène, ledit hétéropolyanion d'Anderson est de manière préférée monomérique de formule $NiMo_6O_{24}H_6^{4-}$.

Les hétéropolyanions d'Anderson très préférés utilisés dans l'invention sont les hétéropolyanions d'Anderson contenant au sein de leur structure du nickel et du molybdène de formule $NiMo_6O_{24}H_6^{4-}$ et $Ni_2Mo_{10}O_{38}H_4^{8-}$ seuls ou en mélange.

Des sels d'hétéropolyanions d'Anderson peuvent également être avantageusement utilisés comme précurseurs de phase active selon l'invention. Lesdits sels d'hétéropolyanions d'Anderson sont avantageusement choisis parmi les sels de cobalt ou de nickel de l'ion monomérique 6-molybdocobaltate respectivement de formule $CoMo_6O_{24}H_6^{3-}$, $3/2Co^{2+}$ ou $CoMo_6O_{24}H_6^{3-}$, $3/2Ni^{2+}$ présentant un rapport atomique dudit promoteur (Co et/ou Ni)/Mo de 0,41, les sels de cobalt ou de nickel de l'ion dimérique decamolybdocobaltate de formule $Co_2Mo_{10}O_{38}H_4^{6-}$, $3Co^{2+}$ ou $Co_2Mo_{10}O_{38}H_4^{6-}$, $3Ni^{2+}$ présentant un rapport atomique dudit promoteur (Co et/ou Ni)/Mo de 0,5, les sels de cobalt ou de nickel de l'ion 6-molybdonickellate de formule $NiMo_6O_{24}H_6^{4-}$, $2Co^{2+}$ ou $NiMo_6O_{24}H_6^{4-}$, $2Ni^{2+}$ présentant un rapport atomique dudit promoteur (Co et/ou Ni)/Mo de 0,5, et les sels de cobalt ou de nickel de l'ion dimérique decamolybdonickellate de formule $Ni_2Mo_{10}O_{38}H_4^{8-}$, $4Co^{2+}$ ou $Ni_2Mo_{10}O_{38}H_4^{8-}$, $4Ni^{2+}$ présentant un rapport atomique dudit promoteur (Co et/ou Ni)/Mo de 0,6.

Les sels d'hétéropolyanions d'Anderson très préférés utilisés dans l'invention sont choisis parmi les sels d'hétéropolyanions renfermant du nickel et du molybdène au sein de leur structure de formule $NiMo_6O_{24}H_6^{4-}$, $2Co^{2+}$, $NiMo_6O_{24}H_6^{4-}$, $2Ni^{2+}$, $Ni_2Mo_{10}O_{38}H_4^{8-}$, $4Co^{2+}$ et $Ni_2Mo_{10}O_{38}H_4^{8-}$, $4Ni^{2+}$, seuls ou en mélange.

D'autres polyoxométallates préférés qui peuvent avantageusement être utilisés comme précurseurs de phase active du catalyseur mis en oeuvre dans le procédé selon l'invention sont les hétéropolyanions dits de Keggin de formule générale $XM_{12}O_{40}^{q-}$ pour lesquels le rapport m/x est égal à 12 et les hétéropolyanions dits de Keggin lacunaire de

formule générale $XM_{11}O_{39}{}^{q-}$ pour lesquels le rapport m/x est égal à 11 et dans laquelle les éléments X et M et la charge q ont la signification précitée. X est donc un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), et q étant un entier compris entre 1 et 20 et de préférence entre 3 et 12.

Lesdites espèces de Keggin sont avantageusement obtenues pour des gammes de pH variables selon les voies d'obtention décrites dans la publication de A. Griboval, P. Blanchard, E. Payen, M. Fournier, J. L. Dubois, Chem. Lett., 1997, 12, 1259.

Des hétéropolyanions de Keggin préférés, avantageusement utilisés comme précurseurs de phase active selon l'invention, sont choisis parmi les hétéropolyanions de formule $PMo_{12}O_{40}{}^{3-}$ $PW_{12}O_{40}{}^{3-}$, $PMo_3W_9O_{40}{}^{3-}$, $PMo_6W_6O_{40}{}^{3-}$, $PVMo_{11}O_{40}{}^{4-}$, $PV_2Mo_{10}O_4{}^{5-}$, $PV_3Mo_9O_{40}{}^{6-}$, $PV_4Mo_8O_{40}{}^{7-}$ et $PMo_{(11-z)}W_zO_{40}{}^{3-}$ avec z étant compris entre 1 et 11, pris seuls ou en mélange, de préférence les hétéropolyanions de Keggin préférés sont choisis parmi les hétéropolyanions de formule $PW_{12}O_{40}{}^{3-}$, $PMo_3W_9O_{40}{}^{3-}$ et $PMo_6W_6O_{40}{}^{3-}$ et de manière préférée, parmi les hétéropolyanions de formule $PW_{12}O_{40}{}^{3-}$ et $PMo_6W_6O_{40}{}^{3-}$ pris seuls ou en mélange.

Les hétéropolyanions de Keggin préférés peuvent également être avantageusement utilisés dans l'invention sous leur forme hétéropolyacide de formule $PW_{12}O_{40}{}^{3-}$, $3H^+$ et $PMo_3W_9O_{40}{}^{3-}$, $3H^+$.

Dans lesdits hétéropolyanions de Keggin de formule ci-dessus, au moins un atome de molybdène est substitué respectivement par un atome de nickel, par un atome de cobalt ou par au moins un atome dé vanadium.

Lesdits hétéropolyanions mentionnés ci-dessus sont décrits dans les publications de L. G. A. van de Water, J. A. Bergwerff, B. R. G. Leliveld, B. M. Weckhuysen, K. P. de Jong, J. Phys. Chem. B, 2005, 109, 14513 et de D. Soogund, P. Lecour, A. Daudin, B. Guichard, C. Legens, C. Lamonier, E. Payen dans Appl. Catal. B, 2010, 98, 1, 39.

Des sels d'hétéropolyanions de type Keggin ou Keggin lacunaire peuvent également être avantageusement utilisés comme précurseurs de phase active selon l'invention. Des sels d'hétéropolyanions ou d'hétéropolyacides de type Keggin et Keggin lacunaire préférés sont avantageusement choisis parmi les sels de cobalt ou de nickel des acides phosphomolybdique, silicomolybdique, phosphotungstique ou silicotungstique. Lesdits sels d'hétéropolyanions ou d'hétéropolyacides de type Keggin ou Keggin lacunaire sont décrits dans le brevet US2547380. De préférence, un sel d'hétéropolyanion de type Keggin est le phosphotungstate de nickel de formule $3/2Ni^{2+}$, $PW_{12}O_{40}{}^{3-}$ présentant un rapport atomique du métal du groupe VI sur le métal du groupe VIII, c'est à dire Ni/W de 0,125.

D'autres sels d'hétéropolyanions ou d'hétéropolyacides de type Keggin ou Keggin lacunaire pouvant avantageusement être utilisés comme précurseurs de phase active selon l'invention sont les sels d'hétéropolyanions ou d'hétéropolyacides de formule générale $Z_xXM_{12}O_{40}$ (ou $xZ^{p+}$, $XM_{12}O_{40}{}^{(p.x)-}$, formule mettant en évidence le contre-ion $Z^{p+}$), dans laquelle Z est le cobalt et/ou le nickel, X est le phosphore, le silicium ou le bore et M est le molybdène et/ou le tungstène, x prend la valeur de 2 ou plus si X est le phosphore, de 2,5 ou plus si X est le silicium et de 3 ou plus si X est le bore. De tels sels d'hétéropolyanions ou d'hétéropolyacides de type Keggin ou Keggin lacunaire sont décrits dans brevet FR2749778. Ces structures présentent l'intérêt particulier par rapport aux structures décrites dans le brevet US2547380 d'atteindre des rapports atomiques de l'élément du groupe VIII sur l'élément du groupe VI supérieurs et en particulier supérieurs à 0,125.

Cette augmentation dudit rapport est obtenue par réduction desdits sels d'hétéropolyanions ou d'hétéropolyacides de type Keggin ou Keggin lacunaire. Ainsi la présence d'au moins une partie du molybdène et/ou du tungstène est à une valence inférieure à sa valeur normale de six telle qu'elle résulte de la composition, par exemple, de l'acide phosphomolybdique, phosphotungstique, silicomolybdique ou silicotungstique.

Des rapports atomiques de l'élément du groupe VIII sur l'élément du groupe VI supérieurs sont particulièrement préférés pour maximiser les performances des catalyseurs d'hydrotraitement et en particulier d'hydrodésulfuration mis en oeuvre dans le procédé selon l'invention.

Les sels d'hétéropolyanions de Keggin substitués de formule $Z_xXM_{11}O_{40}Z'C_{(z-2x)}$ dans laquelle Z' est substitué à un atome M et dans laquelle Z est le cobalt et/ou le nickel, X est le phosphore, le silicium ou le bore et M est le molybdène et/ou le tungstène, Z' est le cobalt, le fer, le nickel, le cuivre ou le zinc, et C est un ion $H^+$ ou un cation alkylammonium, x prend la valeur de 0 à 4,5, z une valeur entre 7 et 9, lesdits sels étant décrits dans le brevet FR2764211 peuvent également être avantageusement utilisés comme précurseurs de phase active selon l'invention. Ainsi, lesdits sels d'hétéropolyanions de Keggin correspondent à ceux décrits dans le brevet FR2749778 mais dans lesquels un atome Z' est substitué à un atome M. Lesdits sels d'hétéropolyanions de Keggin substitués sont particulièrement préférés car ils conduisent à des rapports atomiques entre l'élément du groupe VIII et du groupe VI allant jusqu'à 0,5.

Les sels de nickel d'un hétéropolyanion de type Keggin lacunaire décrits dans la demande de brevet FR2935139 peuvent également être avantageusement utilisés comme précurseurs de phase active selon l'invention. Les sels de nickel d'un hétéropolyanion de type Keggin lacunaire comprenant dans sa structure du tungstène présentent une formule générale $Ni_{x+y/2}XW_{11-y}O_{39-5/2y}$, $zH_2O$ dans laquelle Ni est le nickel, X est choisi parmi le phosphore, le silicium et le bore, W est le tungstène, O est l'oxygène, y = 0 ou 2, x = 3,5 si X est le phosphore, x = 4 si X est le silicium, x = 4,5 si X est le bore et z est un nombre compris entre 0 et 36, et dans laquelle ladite structure moléculaire ne présente aucun atome de nickel en substitution d'un atome de tungstène dans sa structure, lesdits atomes de nickel étant placés en position de contre-ion dans la structure dudit composé. Un avantage de cette invention réside dans la plus grande solubilité de ces sels d'hétéropolyanions.

Les sels de nickel de l'hétéropolyanion de type Keggin lacunaire très préférés utilisés dans l'invention sont choisis parmi les sels de nickel de l'hétéropolyanion de formule $Ni_4SiW_{11}O_{39}$ et $Ni_5SiW_9O_{34}$ pris seuls ou en mélange selon la formulation de la demande de brevet FR2935139 ou de formule $SiW_{11}O_{39}, 4Ni^{2+}$ et $SiW_9O_{34}, 5Ni^{2+}$ selon l'invention.

D'autres polyoxométallates préférés qui peuvent avantageusement être utilisés comme précurseurs de phase active du catalyseur mis en oeuvre dans le procédé selon l'invention sont les hétéropolyanions dits de Strandberg de formule $H_hP_2Mo_5O_{23}^{(6-h)-}$ dans lequel h est égal à 0, 1 ou 2 et pour lesquels le rapport m/x est égal à 5/2.

La préparation desdits hétéropolyanions de Strandberg est décrite dans l'article de W-C. Cheng, N. P. Luthra, J. Catal., 1988, 109, 163. Il a ainsi été montré par J. A. Bergwerff, T. Visser, B. R. G. Leliveld, B. D. Rossenaar, K. P. de Jong, B. M. Weckhuysen, Journal of the American Chemical Society 2004, 126, 44, 14548.

Un hétéropolyanion de Strandberg particulièrement préféré utilisé dans l'invention est l'hétéropolyanion de formule $P_2Mo_5O_{23}^{6-}$.

Ainsi, grâce à des méthodes de préparation diverses, de nombreux polyoxométallates et leurs sels associés sont disponibles avec des rapports promoteur X/métal M variables. De manière générale, tous ces polyoxométallates et leurs sels associés peuvent être avantageusement utilisés pour la préparation des catalyseurs mis en oeuvre dans le procédé selon l'invention. La liste précédente n'est cependant pas exhaustive et d'autres combinaisons peuvent être envisagées.

L'utilisation de polyoxométallates pour la préparation de catalyseurs mis en oeuvre dans le procédé selon l'invention présente de nombreux avantages du point de vue catalytique. Lesdits polyoxométallates qui sont des précurseurs oxydes associant au sein de la même structure moléculaire au moins un élément du groupe VIB, de préférence le molybdène et/ou le tungstène et/ou au moins un élément du groupe VIII, de préférence le cobalt et/ou le nickel et/ou au moins un élément du groupe VB de préférence le vanadium et/ou le niobium et/ou le tantale, conduisent, après sulfuration, à des catalyseurs dont les performances catalytique sont améliorées grâce à un meilleur effet de promotion c'est à dire à une meilleure synergie entre l'élément du groupe VIB, l'élément du groupe VIII et l'élément du groupe VB.

De préférence, dans le cas où le catalyseur mis en oeuvre dans le procédé selon l'invention comprend au moins un élément du groupe VIB, ledit catalyseur comprend une teneur massique totale en élément du groupe VIB exprimée en pourcentage poids d'oxyde par rapport à la masse totale du catalyseur comprise entre 2 et 35% poids et de préférence comprise entre 5 et 25% poids.

Lesdites teneurs sont les teneurs totales en élément du groupe VIB quelle que soit la forme dudit élément du groupe VIB présent dans ledit catalyseur et éventuellement quel que soit son mode d'introduction. Lesdites teneurs sont donc représentatives de la teneur en élément du groupe VIB présent soit sous forme d'au moins un polyoxométallate au sein de la matrice oxyde mésostructurée, soit sous toute autre forme dépendant de son mode d'introduction, telle que par exemple sous forme oxyde.

De préférence, dans le cas où le catalyseur mis en oeuvre dans le procédé selon l'invention comprend un élément du groupe VIII, ledit catalyseur comprend une teneur massique de l'élément du groupe VIII exprimée en pourcentage poids d'oxyde par rapport à la masse totale du catalyseur comprise entre 0,1 et 10% poids et de préférence comprise entre 0,5 et 7% poids.

Lesdites teneurs sont les teneurs totales en élément du groupe VIII quelle que soit la forme dudit élément du groupe VIII présent dans ledit catalyseur et éventuellement quel que soit son mode d'introduction. Lesdites teneurs sont donc représentatives de la teneur en élément du groupe VIII présent soit, sous forme d'au moins un polyoxométallate au sein de la matrice oxyde mésostructurée qu'il soit en position M ou en position X, soit présent sous la forme de contre-ion et/ou éventuellement ajouté à différentes étapes de la préparation de ladite matrice oxyde mésostructurée comme décrit ci-après, soit sous toute autre forme dépendant de son mode d'introduction, telle que par exemple sous forme oxyde.

De préférence, dans le cas où le catalyseur mis en oeuvre dans le procédé selon l'invention comprend un élément du groupe VB, ledit catalyseur comprend une teneur massique de l'élément du groupe VB exprimée en pourcentage poids d'oxyde par rapport à la masse totale du catalyseur comprise entre 0,1 et 10% poids et de préférence comprise entre 1 et 7% poids.

Lesdites teneurs sont les teneurs totales en élément du groupe VB quelle que soit la forme dudit élément du groupe VB présent dans ledit catalyseur et éventuellement quel que soit son mode d'introduction. Lesdites teneurs sont donc représentatives de la teneur en élément du groupe VB présent, soit sous forme d'au moins un polyoxométallate au sein de la matrice oxyde mésostructurée soit sous tout autre forme dépendant de son mode d'introduction, telle que par exemple sous forme oxyde.

De préférence, dans le cas où le catalyseur mis en oeuvre dans le procédé selon l'invention comprend un élément dopant choisi parmi le phosphore, le bore et le silicium, ledit catalyseur comprend une teneur massique en élément dopant choisi parmi le phosphore, le bore et le silicium exprimée en pourcentage poids d'oxyde par rapport à la masse totale du catalyseur comprise entre 0,1 et 10% poids et de préférence entre 0,1 et 5% poids.

Lesdites teneurs sont les teneurs totales en élément dopant choisi parmi le phosphore, le bore et le silicium quelque soit la forme dudit élément dopant présent dans ledit catalyseur et quelque soit son mode d'introduction. Lesdites teneurs sont donc représentatives à la fois de la teneur en élément dopant choisi parmi le phosphore, le bore et le silicium présent sous forme d'au moins un polyoxométallate au sein de la matrice oxyde mésostructurée en position X et/ou éventuellement ajoutés à différentes étapes de la préparation de ladite matrice oxyde mésostructurée comme décrit ci-après, soit sous toute autre forme dépendant de son mode d'introduction, telle que par exemple sous forme oxyde.

Selon l'invention, lesdits polyoxométallates définis ci-dessus sont présents au sein d'une matrice mésostructurée à base d'oxyde d'au moins un élément Y choisi dans le groupe constitué par le silicium, l'aluminium, le titane, le zirconium, le gallium, et le cérium et le mélange d'au moins un de ces éléments, ladite matrice ayant une taille de pore comprise entre 1,5 et 50 nm et présentant des parois amorphes d'épaisseur comprise entre 1 et 30 nm et de préférence entre 1 et 10 nm.

Par matrice mésostructurée, on entend au sens de la présente invention un solide inorganique présentant une porosité organisée à l'échelle des mésopores de chacune des particules élémentaires constituant ledit solide, c'est-à-dire une porosité organisé à l'échelle des pores ayant une taille uniforme comprise entre 1,5 et 50 nm et de préférence entre 1,5 et 30 nm et de manière encore plus préférée entre 4 et 16 nm et répartis de façon homogène et régulière dans chacune desdites particules constituant la matrice. La matière située entre les mésopores de chacune des particules élémentaires de la matrice oxyde du précurseur du catalyseur utilisé dans le procédé selon l'invention est amorphe et forme des parois, ou murs, dont l'épaisseur est comprise entre 1 et 30 nm et de préférence entre 1 et 10 nm. L'épaisseur des parois correspond à la distance séparant un pore d'un autre pore. L'organisation de la mésoporosité décrite ci-dessus conduit à une structuration de la matrice oxyde, laquelle peut être hexagonale, vermiculaire ou cubique et de façon préférée hexagonale.

Généralement, lesdits matériaux dits mésostructurés sont avantageusement obtenus par des méthodes de synthèse dites de "chimie douce" (G. J. de A. A. Soler-IIIia, C. Sanchez, B. Lebeau, J. Patarin, Chem. Rev., 2002, 102, 4093) à basse température via la coexistence en solution aqueuse ou dans des solvants de polarité marquée de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse/condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est inférieure à la concentration micellaire critique, ou bien via la précipitation ou la gélification directe du solide lors de l'emploi d'une solution de précurseurs plus concentrée en réactifs.

La libération de la porosité est ensuite obtenue par élimination du tensioactif, celle-ci étant réalisée classiquement par des procédés d'extraction chimique ou par traitement thermique.

En fonction de la nature des précurseurs inorganiques et de l'agent structurant employé ainsi que des conditions opératoires imposées, plusieurs familles de matériaux mésostructurés ont été développées. La famille M41S est constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm. La famille M41 S a initialement été développée par Mobil dans l'article J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834.

La famille de matériaux dénommée SBA se caractérise par l'utilisation d'agents structurants macromoléculaires amphiphiles de type copolymères à blocs. Ces matériaux sont caractérisés par une structure généralement hexagonale, cubique ou lamellaire, des pores de taille uniforme comprise dans une gamme de 4 à 50 nm et des parois amorphes d'épaisseur comprise dans une gamme de 3 à 7 nm.

Conformément à l'invention, l'élément Y présent sous forme d'oxyde dans ladite matrice mésostructurée est choisi dans le groupe constitué par le silicium, l'aluminium, le titane, le zirconium, le gallium, et le cérium et le mélange d'au moins un de ces éléments. De préférence, ledit élément Y est choisi dans le groupe constitué par le silicium, l'aluminium, le titane, le zirconium, et le mélange d'au moins un de ces éléments.

Selon l'invention, ladite matrice mésostructurée est préférentiellement constituée d'oxyde de silicium, dans ce cas, ladite matrice est purement silicique, ou d'un mélange d'oxyde de silicium et d'oxyde d'aluminium et de préférence, ladite matrice mésostructurée est constituée d'un mélange d'oxyde de silicium et d'oxyde d'aluminium.

Dans le cas préféré où ladite matrice mésostructurée est purement silicique, ladite matrice est avantageusement une matrice mésostructurée appartenant à la famille M41S ou à la famille de matériaux dénommée SBA et de préférence une matrice du type SBA-15.

Dans le cas préféré ou ladite matrice mésostructurée est constituée d'un mélange d'oxyde de silicium et d'oxyde d'aluminium, ladite matrice présente un rapport molaire Si/Al au moins égal à 0,02, de préférence compris entre 0,1 et 1000 et de manière très préférée compris entre 1 et 100.

Selon l'invention, lesdits polyoxométallates définis ci-dessus sont présents au sein d'une matrice oxyde mésostructurée. Plus précisément, lesdits polyoxométallates présents au sein de ladite matrice oxyde mésostructurée, sont piégés au sein même de ladite matrice. Lesdits polyoxométallates sont présents dans les parois de ladite matrice mésostructurée. L'occlusion desdits polyoxométallates dans les parois de ladite matrice mésostructurée est réalisable par une technique de synthèse dite directe, lors de la synthèse de ladite matrice servant de support par ajout de polyoxométallates désirés aux réactifs précurseurs du réseau inorganique oxyde de la matrice.

Ladite matrice oxyde mésostructurée comprenant lesdits polyoxométallates piégés dans ses parois mise en oeuvre dans le procédé selon l'invention est avantageusement exclusivement préparée par synthèse directe. Plus précisément, ladite matrice oxyde mésostructurée est avantageusement obtenue selon un procédé de préparation comprenant : a) une étape de formation d'au moins un polyoxométallate de formule précitée selon une méthode connue de l'Homme du métier, b) une étape de mélange en solution d'au moins un tensioactif, d'au moins un précurseur.de silice, d'au moins un précurseur d'au moins un élément Y choisi dans le groupe constitué par le silicium, l'aluminium, le titane, le zirconium, le gallium, et le cérium et le mélange d'au moins un de ces éléments, puis d'au moins un polyoxométallate obtenu selon l'étape a) pour obtenir une solution colloïdale, c) une étape de mûrissement de ladite solution colloïdale obtenue à l'issue de l'étape b) en temps et en température; d) une étape éventuelle d'autoclavage de la suspension obtenue à l'issue de l'étape c), e) une étape de filtration de la suspension obtenue à l'issue de l'étape c) et après passage éventuel dans l'étape d'autoclavage, de lavage et de séchage du solide ainsi obtenu, f) une étape d'élimination dudit tensioactif conduisant à la génération de la mésoporosité uniforme et organisée de la matrice mésostructurée, g) une étape optionnelle de traitement du solide obtenu à l'issue de l'étape f) afin de régénérer partiellement ou en intégralité l'entité polyoxométallate éventuellement partiellement ou totalement décomposée lors de l'étape f) et h) une étape optionnelle de séchage dudit solide ainsi obtenu constitué de ladite matrice oxyde mésostructurée comprenant lesdits polyoxométallates piégés dans ses parois.

L'étape a) de formation d'au moins un polyoxométallate de formule précitée est avantageusement mise en oeuvre selon une méthode connue de l'Homme du métier. De préférence, les polyoxométallates décrits ci-dessus ainsi que leurs procédés de préparation associés sont utilisés dans le procédé de préparation de ladite matrice oxyde mésostructurée comprenant lesdits polyoxométallates piégés dans ses parois.

L'étape b) dudit procédé de préparation consiste en le mélange en solution d'au moins un tensioactif, , d'au moins un précurseur de silice, d'au moins un précurseur d'au moins un élément Y choisi dans le groupe constitué par le silicium, l'aluminium, le titane, le zirconium, le gallium, et le cérium et le mélange d'au moins un de ces éléments, puis d'au moins un polyoxométallate obtenu selon l'étape a) pour obtenir une solution colloïdale.

De préférence, au moins un tensioactif, au moins un précurseur de silice et au moins un précurseur d'au moins un élément Y choisi dans le groupe constitué par le silicium, l'aluminium, le titane, le zirconium, le gallium, et le cérium et le mélange d'au moins un de ces éléments sont mélangés en solution pendant une durée comprise entre 15 minutes et 1 heure, puis au moins un polyoxométallate obtenu selon l'étape a) en mélange dans un solution de même nature et de préférence la même solution est ajouté au mélange précédent pour obtenir une solution colloïdale.

L'étape b) de mélange se fait sous agitation à une température comprise entre 25°C et 80°C et de préférence comprise entre 25°C et 50°C pendant une durée comprise entre 5 minutes et 2 h et de préférence entre 30 minutes et 1 h.

Dans le cas où l'élément Y choisi dans le groupé constitué par le silicium, l'aluminium, le titane, le zirconium, le gallium, et le cérium et le mélange d'au moins un de ces éléments, le(s) précurseurs dudit élément Y est(sont) avantageusement un sel inorganique dudit élément Y de formule $YZ_n$, (n= 3 ou 4), Z étant un halogène, le groupement $NO_3$ ou un perchlorate, de préférence Z est le chlore. Le(s) précurseur(s) dudit élément Y considérés(s) peu(ven)t être aussi un(des) précurseur(s) alcoxyde(s) de formule $Y(OR)_n$ ou R = éthyle, isopropyle, n-butyle, s-butyle, t-butyle, etc ou un précurseur chélaté tel que $Y(C_5H_8O_2)_n$, avec n = 3 ou 4. Le(s) précurseur(s) dudit élément Y peu(ven)t également être un(des) oxyde(s) ou un(des) hydroxyde(s) dudit élément Y. En fonction de la nature de l'élément Y, le précurseur de l'élément Y peut également être de la forme $YOZ_2$, Z étant un anion monovalent comme un halogène ou le groupement $NO_3$.

Dans le cas préféré où ladite matrice mésostructurée est purement silicique, c'est à dire dans le cas où ladite matrice est constituée d'oxyde de silicium, au moins un précurseur silicique est introduit dans l'étape b) de mélange en solution.

Le précurseur silicique est avantageusement obtenu à partir de toute source de silice et avantageusement d'un précurseur silicate de sodium de formule $Na_2SiO_3$, d'un précurseur chloré de formule $SiCl_4$, d'un précurseur alcoxyde de formule $Si(OR)_4$ où R = H, méthyle, éthyle ou d'un précurseur chloroalcoxyde de formule $Si(OR)_{4-x}Cl_x$ où R = H, méthyle, éthyle, x étant compris entre 0 et 4. Le précurseur silicique peut également avantageusement être un précurseur alcoxyde de formule $Si(OR)_{4-x}R'_x$ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4.

Un précurseur silicique préféré est le tetraéthylorthosilicate (TEOS) de formule $Si(OEt)_4$.

Dans le cas préféré où ladite matrice mésostructurée est constituée d'un mélange d'oxyde de silicium et d'oxyde d'aluminium, au moins un précurseur silicique et au moins un précurseur aluminique peuvent être introduits directement dans l'étape b) du mélange en solution.

Dans un autre cas préféré où ladite matrice mésostructurée est constituée d'un mélange d'oxyde de silicium et d'oxyde d'aluminium, uniquement au moins un précurseur silicique peut être introduit dans l'étape b) de mélange en solution, l'élément aluminium pouvant être introduit par dépôt d'au moins un précurseur aluminique sur le solide obtenu à l'issue de l'étape e) ou bien à l'issue de l'étape f). Dans le cas où le précurseur aluminique est introduit par dépôt sur le solide obtenu à l'issu de l'étape f), une étape complémentaire de traitement thermique est avantageusement réalisée entre les étapes f) et g) afin de décomposer le précurseur aluminique. Ledit traitement thermique est avantageusement réalisé dans les mêmes conditions que le traitement thermique de l'étape f) décrit ci-dessous. Le précurseur aluminique est avantageusement déposé selon les méthodes usuelles bien connues de l'Homme du métier telles que par exemple les méthodes d'imprégnation à sec ou en excès de solvants.

Le précurseur aluminique est avantageusement un sel inorganique d'aluminium de formule $AlX_3$, X étant un halogène ou le groupement $NO_3$. De préférence, X est le chlore. Le précurseur aluminique peut également avantageusement être un précurseur organométallique de formule $Al(OR")_3$ ou R" = éthyle, isopropyle, n-butyle, s-butyle ou t-butyle ou un précurseur chélaté tel que l'aluminium acétylacétonate $(Al(CH_7O_2)_3)$. Le précurseur aluminique peut également avantageusement être un oxyde ou un hydroxyde d'aluminium.

La solution dans laquelle sont mélangés au moins un tensioactif, au moins un polyoxométallate obtenu selon l'étape a) et au moins un précurseur d'au moins un élément Y décrit ci-dessus conformément à l'étape b) dudit procédé de préparation, peut avantageusement être acide, basique ou neutre. De préférence, ladite solution est acide ou neutre. Les acides utilisés pour obtenir une solution acide sont avantageusement choisis parmi l'acide chlorhydrique, l'acide sulfurique et l'acide nitrique. Ladite solution peut avantageusement être aqueuse ou peut avantageusement être un mélange eau-solvant organique, le solvant organique étant de préférence un solvant polaire, de manière préférée un alcool, et de manière plus préférée, le solvant est l'éthanol. Ladite solution peut également être avantageusement pratiquement organique, de préférence pratiquement alcoolique, la quantité d'eau étant telle que l'hydrolyse des précurseurs inorganiques soit assurée. La quantité d'eau est donc de préférence stoechiométrique. De manière très préférée, ladite solution est une solution aqueuse acide.

Le tensioactif utilisé pour la préparation du mélange dans l'étape b) dudit procédé de préparation est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de cétyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[$CH_2$-$CH_2$-$CH_2$-$CH_2$-O-CO-R1- avec R1 = $C_4F_9$, $C_8F_{17}$, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Förster, M. Antionnetti, Adv. Mater, 1998, 10, 195; S. Förster, T. Plantenberg, Angew. Chem. Int. Ed, 2002, 41, 688; H. Cölfen, Macromol. Rapid Commun, 2001, 22, 219). De manière préférée, on utilise un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées $(PEO)_x$ et $(PEO)_z$ et les chaînes de poly(oxyde d'alkylène) de nature hydrophobe sont des chaînes de poly(oxyde de propylène) notées $(PPO)_y$, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule $(PEO)_x$-$(PPO)_y$-$(PEO)_z$ où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe. De façon préférée, on utilise pour la préparation du mélange de l'étape b) dudit procédé de préparation le mélange d'un tensioactif ionique tel que le CTAB et d'un tensioactif non ionique tel que le P123.

Les polyoxométallates décrits ci-dessus et présentant la formule générale précitée sont utilisés dans l'étape b) du procédé de préparation de ladite matrice oxyde mésostructurée comprenant lesdits polyoxométallates piégés dans ses parois.

Les polyoxométallates préférés utilisés selon l'invention sont avantageusement choisis parmi les polyoxométallates de formule $PVMo_{11}O_{40}^{4-}$, $PV_2Mo_{10}O_{40}^{5-}$, $Pv_3Mo_9O_{40}^{6-}$ et $PV_4Mo_8O_{40}^{7-}$, $HPNiMo_{11}O_{40}^{6-}$, $P_2Mo_5O_{23}^{6-}$, $Ni_2Mo_{10}O_{38}H_4^{8-}$, $NiMo_6O_{24}H_6^{4-}$, $PMo_{12}O_{40}^{3-}$, $PW_{12}O_{40}^{3-}$, $PMo_3W_9O_{40}^{3-}$, $PMo_6W_6O_{40}^{3-}$, pris seuls ou en mélange.

L'étape c) dudit procédé de préparation consiste en une étape de mûrissement, c'est à dire à une étape de conservation sous agitation de la dite solution colloïdale obtenue à l'issue de l'étape b) à une température comprise entre 25°C et 80°C et de préférence comprise entre 25°C et 40°C pendant une durée comprise entre 1 h et 48 h et de préférence entre 20 h et 30 h.

A l'issue de l'étape c) de mûrissement, une suspension est obtenue.

L'étape d) optionnelle dudit procédé de préparation consiste en un autoclavage éventuel de la suspension obtenue à l'issue de l'étape c). Cette étape consiste à placer ladite suspension dans une enceinte fermée à une température comprise entre 80°C et 140°C, de préférence comprise entre 90°C et 120°C et de manière encore préférentielle comprise entre 100°C et 110°C de façon à travailler en pression autogène inhérente aux conditions opératoires choisies. L'autoclavage est maintenu pendant une durée comprise entre 12 et 48 heures et de préférence entre 15 et 30 heures.

La suspension obtenue à l'issue de l'étape c) est ensuite filtrée selon l'étape e) et le solide ainsi obtenu est lavé et séché. Le lavage dudit solide obtenu après filtration et avant séchage se fait avantageusement avec une solution de même nature que la solution utilisée pour le mélange conformément à l'étape b) dudit procédé de préparation, puis par une solution aqueuse d'eau distillée.

Le séchage dudit solide obtenu après filtration et lavage au cours de l'étape e) dudit procédé de préparation est avantageusement réalisé dans un four à une température comprise entre 25°C et 140°C, de préférence entre 25°C et 100°C et de manière préférée entre 30°C et 80°C et pendant une durée comprise entre 10 et 48 h et de préférence comprise entre 10 et 24 h. L'étape f) consiste ensuite en une étape d'élimination dudit tensioactif conduisant à la génération de la mésoporosité uniforme et organisée de la matrice mésostructurée. L'élimination du tensioactif au cours de l'étape f) dudit procédé de préparation afin d'obtenir la matrice mésostructurée utilisée selon l'invention est avantageusement réalisée par traitement thermique et de préférence par calcination sous air à une température comprise entre 300°C et 1000°C et de préférence à une température comprise entre 400°C et 600°C pendant une durée comprise entre 1 et 24 heures et de préférence pendant une durée comprise entre 6 et 20 heures.

L'étape f) est éventuellement suivie d'une étape g) de traitement du solide afin de régénérer au moins partiellement ou en intégralité l'entité polyoxométallate éventuellement au moins partiellement ou totalement décomposée lors de l'étape f). Dans le cas où ledit polyoxométallate est totalement décomposée lors de l'étape f), ladite étape g) de régénération est obligatoire. Cette étape consiste avantageusement en un lavage du solide avec un solvant polaire en utilisant un extracteur de type Soxhlet. De manière préférée, le solvant d'extraction est choisi parmi les alcools, l'acétonitrile et l'eau. De préférence le solvant est un alcool et de manière très préférée le solvant est le méthanol. Ledit lavage est réalisé pendant une durée comprise entre 1 et 24 heures, et de préférence entre 1 et 8 heures à une température comprise entre 65 et 110 °C et de préférence comprise entre 90 et 100°C.

L'extraction au solvant polaire permet non seulement de reformer lesdits polyoxométallates piégés dans les parois de ladite matrice mais aussi d'éliminer lesdits polyoxométallates éventuellement formés à la surface de ladite matrice.

Dans le cas où l'étape g) est obligatoire, ladite étape g) est suivie de l'étape h).L'étape h) consiste en une étape de séchage dudit solide ainsi obtenu ledit solide étant constitué de ladite matrice oxyde mésostructurée comprenant lesdits polyoxométallates piégés dans ses parois. Le séchage dudit solide est avantageusement réalisé dans un four ou dans une étuve à une température comprise entre 40°C et 140°C de préférence entre 40°C et 100°C et pendant une durée comprise entre 10 et 48 h.

Ladite matrice oxyde mésostructurée comprenant lesdits polyoxométallates piégés dans ses parois mise en oeuvre dans le procédé selon l'invention présente avantageusement une surface spécifique comprise entre 100 et 1000 $m^2/g$ et de manière très avantageuse comprise entre 300 et 500 $m^2/g$.

Ladite matrice oxyde mésostructurée comprenant lesdits polyoxométallates piégés dans ses parois, c'est à dire le catalyseur sous sa forme oxyde, présente une forme de chacune des particules élémentaires la constituant, non homogène, c'est à dire une forme irrégulière et de préférence non sphérique. De préférence, lesdites particules élémentaires constituant ladite matrice comprenant lesdits polyoxométallates piégés dans ses parois sont non sphériques. A l'issue de la méthode de préparation par synthèse dite directe, lesdites particules élémentaires constituant ladite matrice comprenant lesdits polyoxométallates piégés dans ses parois présentent avantageusement une taille moyenne comprise entre 50 nm et 10 microns et de préférence comprise entre 50 nm et 1 micron.

D'autres éléments peuvent avantageusement être ajoutés à différentes étapes de la préparation de ladite matrice oxyde mésostructurée utilisée dans l'invention. Lesdits éléments sont de préférence choisis parmi les éléments du groupe VIII appelés promoteurs, les éléments dopants et les composés organiques. De manière très préférée, ledit métal du groupe VIII est choisi parmi le nickel et le cobalt et de manière plus préférée, le métal du groupe VIII est constitué uniquement de cobalt ou de nickel. De manière encore plus préférée, le métal du groupe VIII est le cobalt.

Les éléments dopants sont de préférence choisis parmi le bore, le silicium, le phosphore et le fluor, pris seuls ou en mélange.

Lesdits éléments peuvent avantageusement être ajoutés seuls ou en mélange au cours d'une ou de plusieurs étapes du procédé de préparation de ladite matrice choisies parmi les étapes i), ii), iii) et iv) suivantes.

i) Lesdits éléments peuvent avantageusement être introduits lors de l'étape b) du procédé de préparation de ladite matrice de mélange en solution d'au moins un tensioactif, d'au moins un précurseur de silice, d'au moins un précurseur d'au moins un élément Y choisi dans le groupe constitué par le silicium, l'aluminium, le titane, le zirconium, le gallium, et le cérium et le mélange d'au moins un de ces éléments, puis d'au moins un polyoxométallate obtenu selon l'étape a) pour obtenir une solution colloïdale.

ii) Lesdits éléments peuvent avantageusement être introduits après l'étape f) et avant l'étape g) dudit procédé de préparation. Lesdits éléments peuvent avantageusement être introduits par toute technique connue de l'Homme du métier et de manière avantageuse par imprégnation à sec.

iii) Lesdits éléments peuvent avantageusement être introduits après l'étape h) de séchage dudit procédé de préparation avant mise en forme. Lesdits éléments peuvent avantageusement être introduits par toute technique connue de l'Homme du métier et de manière avantageuse par imprégnation à sec.

iv) Lesdits éléments peuvent avantageusement être introduits après l'étape de mise en forme de ladite matrice. Lesdits éléments peuvent avantageusement être introduits par toute technique connue de l'Homme du métier et de manière avantageuse par imprégnation à sec.

Après chacune des étapes ii) iii) ou iv) décrites ci-dessus, le solide obtenu constitué de ladite matrice oxyde silicique mésostructurée comprenant lesdits polyoxométallates piégés dans ses parois peut avantageusement subir une étape de séchage et éventuellement une étape de calcination sous air éventuellement enrichi en $O_2$ à une température comprise entre 200 et 600°C et de préférence comprise entre 300 et 500°C pendant une durée comprise entre 1 et 12 heures et de façon préférée pendant une durée comprise entre 2 et 6 heures.

Les sources d'éléments du groupe VIII qui peuvent avantageusement être utilisées, sont bien connues de l'Homme du métier. Les nitrates de préférence choisis parmi le nitrate de cobalt et le nitrate de nickel, les sulfates, les hydroxydes choisis parmi les hydroxydes de cobalt et les hydroxydes de nickel, les phosphates, les halogénures choisis parmi les chlorures, les bromures et les fluorures, les carboxylates choisis parmi les acétates et les carbonates peuvent avantageusement être utilisés comme sources d'éléments du groupe VIII.

Les éléments promoteurs du groupe VIII sont avantageusement présents dans le catalyseur à des teneurs comprises entre 0,1 et 10% poids, de préférence entre 1 et 7% poids d'oxyde par rapport au catalyseur final.

Les éléments dopants pouvant avantageusement être introduits sont avantageusement choisis parmi le bore, le silicium, le phosphore et le fluor pris seuls ou en mélange. L'élément dopant est un élément ajouté, qui en lui-même ne présente aucun caractère catalytique mais qui accroît l'activité catalytique du(des) métal(taux).

Ledit élément dopant peut être avantageusement introduit seul ou en mélange lors de la synthèse dudit matériau utilisé dans l'invention. Il peut également être introduit par imprégnation du matériau utilisé selon l'invention avant ou après séchage, avant ou après réextraction. Enfin, ledit dopant peut-être introduit par imprégnation dudit matériau utilisé dans l'invention après mise en forme.

Les éléments dopants sont avantageusement présents dans le catalyseur utilisé selon la présente invention à une teneur comprise entre 0,1 et 10% poids, de préférence entre 0,5 et 8% poids, et de manière encore plus préférée entre 0,5 et 6% poids d'oxyde par rapport au catalyseur final.

La source de bore peut avantageusement être l'acide borique, de préférence l'acide orthoborique $H_3BO_3$, le diborate ou le pentaborate d'ammonium, l'oxyde de bore, les esters boriques. Le bore peut également être introduit en même temps que le(s) élément(s) du groupe VIB sous la forme d'hétéropolyanions de Keggin, Keggin lacunaire, Keggin substitué tels que par exemple sous la forme de l'acide boromolybdique et de ses sels, ou de l'acide borotungstique et de ses sels lors de la synthèse de ladite matrice. Le bore, lorsqu'il n'est pas introduit lors de la synthèse de ladite matrice mais en post-imprégnation, peut avantageusement être introduit par exemple par une solution d'acide borique dans un mélange eau/alcool ou encore dans un mélange eau/éthanolamine. Le bore peut également avantageusement être introduit sous la forme d'un mélange d'acide borique, d'eau oxygénée et d'un composé organique basique contenant de l'azote tel que l'ammoniaque, les amines primaires et secondaires, les amines cycliques, les composés de la famille de la pyridine et des quinoléines et les composés de la famille du pyrrole.

La source de phosphore peut avantageusement être l'acide orthophosphorique $H_3PO_4$, les sels et esters correspondants ou les phosphates d'ammonium. Le phosphore peut également avantageusement être introduit en même temps que le(s) élément(s) du groupe VIB sous la forme d'hétéropolyanions de Keggin, Keggin lacunaire, Keggin substitué ou de type Strandberg tels que par exemple sous la formé d'acide phosphomolybdique et de ses sels, de l'acide phosphotungstique et ses sels, lors de la synthèse de ladite matrice. Le phosphore, lorsqu'il n'est pas introduit lors de la synthèse de ladite matrice mais en post-imprégnation, peut avantageusement être introduit sous la forme d'un mélange d'acide phosphorique et d'un composé organique basique contenant de l'azote tel que l'ammoniaque, les amines primaires et secondaires, les amines cycliques, les composés de la famille de la pyridine et des quinoléines et les composés de la famille du pyrrole.

Les sources de fluor qui peuvent avantageusement être utilisées sont bien connues de l'Homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor, lorsqu'il n'est pas introduit lors de la synthèse de ladite matrice mais en post-imprégnation, peut avantageusement être introduit par exemple par imprégnation d'une solution aqueuse d'acide fluorhydrique, ou de fluorure d'ammonium ou encore de difluorure d'ammonium.

Une fois l'élément dopant introduit par post-imprégnation, l'Homme du métier peut procéder avantageusement à un séchage à une température avantageusement comprise entre 90 et 150°C et par exemple à 120°C, et éventuellement ensuite à une calcination de façon préférée sous air en lit traversé, à une température avantageusement comprise entre 300 et 700°C et par exemple à 450°C pendant 4 heures.

Les composés organiques utilisés à titre d'éléments promoteurs de la fonction hydrogénante sont de préférence choisis parmi les agents chélatants, les agents non chélatants, les agents réducteurs et les additifs connus de l'Homme du métier. Lesdits composés organiques sont avantageusement choisis parmi les mono-, di- ou polyalcools éventuellement éthérifiés, les acides carboxyliques, les sucres, les mono, di ou polysaccharides non cycliques tels que le glucose, le fructose, le maltose, le lactose ou le sucrose, les esters, les éthers, les éthers-couronnes, les composés contenant du soufre ou de l'azote comme l'acide nitriloacétique, l'acide éthylènediaminetetraactique, ou la diéthylènetriamine.

Ladite matrice oxyde mésostructurée comprenant lesdits polyoxométallates piégés dans ses parois et servant de support du catalyseur peut être obtenue sous forme de poudre, de billes, de pastilles, de granulés ou d'extrudés, les opérations de mises en forme étant réalisées selon les techniques classiques connues de l'Homme du métier. De préférence, ladite matrice oxyde mésostructurée utilisée selon l'invention est obtenue sous forme de poudre et mise en forme sous forme d'extrudés ou de billes.

Lors de ces opérations de mise en forme, il est également possible d'ajouter à ladite matrice oxyde mésostructurée comprenant lesdits polyoxométallates piégés dans ses parois, au moins un matériau oxyde poreux de préférence choisi dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus et les combinaisons alumine-oxyde de bore, les mélanges alumine-titane, alumine-zircone et titane-zircone. Il est également possible d'ajouter les aluminates, tels que par exemple les aluminates de magnésium, de calcium, de baryum, de manganèse, de fer, de cobalt, de nickel, de cuivre et de zinc, les aluminates mixtes tels que par exemple ceux contenant au moins deux des métaux cités ci-dessus. Il est également avantageusement possible d'ajouter les titanates, tels que par exemple les titanates de zinc, nickel, cobalt. Il est également avantageusement possible d'employer des mélanges d'alumine et de silice et des mélanges d'alumine avec d'autres composés tels que par exemple les éléments du groupe VIB, le phosphore, le fluor ou le bore. Il est également possible d'employer des argiles simples synthétiques ou naturelles de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. Il est également avantageusement possible d'utiliser des mélanges d'alumine et d'argile et des mélanges de silice-alumine et d'argile. Lors de ces opérations de mise en forme, il est également possible d'ajouter à ladite matrice oxyde mésostructurée comprenant lesdits polyoxométallates piégés dans ses parois, au moins un cristal de zéolithe. Lesdits cristaux zéolithiques présentent avantageusement une taille de pores comprise entre 0,2 et 2 nm, de préférence entre 0,2 et 1 nm et de manière très préférée entre 0,2 et 0,8 nm. Lesdits cristaux zéolitiques représentent avantageusement de 0,1 à 30% poids, de préférence de 0,1 à 20% poids et de manière très préférée de 0,1 à 10% poids de ladite matrice oxyde mésostructurée comprenant lesdits polyoxométallates. Toute zéolithe et en particulier mais de façon non restrictive celles répertoriées dans "Atlas of zeolite framework types", 6th revised Edition, 2007, Ch. Baerlocher, L. B. L. McCusker, D. H. Olson peut avantageusement être employée au cours de cette mise en forme. Les cristaux zéolithiques comprennent de préférence au moins une zéolithe choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, Ferriérite et EU-1. De manière très préférée, les cristaux zéolithiques comprennent au moins une zéolithe choisie parmi les zéolithes de type structural MFI, BEA, FAU, et LTA. Des cristaux de différentes zéolithes et notamment de zéolithes de type structural différent peuvent être ajoutés à ladite matrice oxyde mésostructurée comprenant lesdits polyoxométallates. En particulier, ladite matrice oxyde mésostructurée comprenant lesdits polyoxométallates peut comprendre après mise en forme et de manière avantageuse au moins des premiers cristaux zéolithiques dont la zéolithe est choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1, de préférence parmi les zéolithes de type structural MFI, BEA, FAU, et LTA et au moins des seconds cristaux zéolithiques dont la zéolithe est différente de celle des premiers cristaux zéolithiques et est choisie parmi les zéolithes IZM-2, ZSM-5,ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1, de préférence parmi les zéolithes de type structural MFI, BEA, FAU, et LTA. Les cristaux zéolithiques comprennent avantageusement au moins une zéolithe soit entièrement silicique soit contenant, outre du silicium, au moins un élément T choisi parmi l'aluminium, le fer, le bore, l'indium, le gallium et le germanium, de préférence l'aluminium.

Ladite matrice oxyde mésostructurée comprenant lesdits polyoxométallates piégés dans ses parois est caractérisée par plusieurs techniques d'analyses et notamment par diffraction des rayons X aux bas angles (DRX aux bas angles), par diffraction des rayons X aux grands angles (DRX), par volumétrie à l'azote (BET), par microscopie électronique à transmission (MET) éventuellement couplée à une analyse X, par microscopie électronique à balayage (MEB), par fluorescence X (FX) et par toute technique connue de l'Homme du métier pour caractériser la présence de polyoxométallates comme les spectroscopies Raman en particulier, UV-visible ou encore infrarouge ainsi que les microanalyses. Des techniques telles que la résonance magnétique nucléaire (RMN) ou encore la résonance paramagnétique électronique (RPE) (notamment dans le cas de l'utilisation d'hétéropolyanions réduits), pourront aussi également être utilisées selon le type d'hétéropolyanions employés.

A l'issue du procédé de préparation décrit ci-dessus, le catalyseur se présente, sous sa forme oxyde, sous la forme d'un solide constitué d'une matrice oxyde mésostructurée comprenant lesdits polyoxométallates piégés dans ses parois.

Conformément à l'invention, ledit catalyseur, sous sa forme oxyde, est sulfuré avant d'être mis en oeuvre dans le procédé d'hydrodésulfuration selon l'invention.

Cette étape de sulfuration génère la phase sulfure active. En effet, la transformation d'au moins un polyoxométallate piégé dans la matrice oxyde mésostructurée en sa phase active sulfurée associée est avantageusement réalisée par sulfuration, c'est à dire par un traitement en température de ladite matrice au contact d'un composé organique soufré décomposable et générateur d'H$_2$S ou directement au contact d'un flux gazeux d'H$_2$S dilué dans H$_2$ à une température comprise entre 200 et 600°C et de préférence comprise entre 300 et 500°C selon des procédés bien connus de l'Homme du métier. Plus précisément, la sulfuration est réalisée 1) dans une unité du procédé elle-même à l'aide de la charge à traiter en présence d'hydrogène et d'hydrogène sulfuré (H$_2$S) introduit tel quel ou issu de la décomposition d'un composé soufré organique, on parle alors de sulfuration in-situ ou 2) préalablement au chargement du catalyseur dans l'unité, on parle alors de sulfuration ex-situ. Dans le cas d'une sulfuration ex-situ, des mélanges gazeux peuvent avantageusement être mis en oeuvre tels que les mélanges H$_2$/H$_2$S ou N$_2$/H$_2$S. Le catalyseur sous sa forme oxyde peut aussi avantageusement être sulfuré ex-situ à partir de composés modèles en phase liquide, l'agent sulfurant étant alors choisi parmi le diméthyldisulfure (DMDS), le diméthylsulfure, le n-butylmercaptan, les composés polysulfures de type tertiononylpolysulfure, ceux-ci étant utilisés dans une matrice organique composée de molécules aromatiques ou alkyles

Avant ladite étape de sulfuration, ledit catalyseur sous sa forme oxyde constitué d'une matrice oxyde mésostructurée comprenant lesdits polyoxométallates piégés dans ses parois peut avantageusement être prétraité thermiquement selon des méthodes bien connues de l'Homme du métier, de préférence par calcination sous air à une température comprise entre 300 et 1000°C et de préférence une température comprise entre 500 à 600°C pendant une durée comprise entre 1 et 24 heures et de préférence pendant une durée comprise entre 6 et 15 heures.

Selon un mode de réalisation préféré, les polyoxométallates piégés dans les parois de ladite matrice oxyde mésostructurée peuvent avantageusement être sulfurés partiellement ou totalement au moment du procédé de préparation par synthèse directe de ladite matrice oxyde mésostructurée comprenant lesdits polyoxométallates utilisé selon l'invention et de préférence au cours de l'étape b) dudit procédé de préparation, par l'introduction dans la solution, en plus d'au moins un tensioactif, d'au moins un polyoxométallate et d'au moins un précurseur de l'élément Y, de précurseurs soufrés avantageusement choisis parmi la thiourée, la thioacétamide, les mercaptans, les sulfures et les disulfures. La décomposition à basse température, c'est à dire à une température comprise entre 80 et 90°C desdits précurseurs soufrés, soit lors de l'étape c) de mûrissement soit lors de l'étape d) d'autoclavage entraine la formation de H$_2$S permettant ainsi la sulfuration desdits polyoxométallates.

Selon un autre mode de réalisation préféré, la sulfuration partielle ou totale desdits polyoxométallates peut avantageusement être réalisée par introduction desdits précurseurs soufrés dans l'étape g) de régénération partielle ou totale desdits polyoxométallates piégés dans ladite matrice oxyde mésostructurée du catalyseur utilisé dans l'invention.

Le procédé d'hydrocraquage selon l'invention est avantageusement effectué en présence d'un ou plusieurs catalyseur(s) d'hydrocraquage décrit(s) selon l'invention dans une ou plusieurs unité(s) réactionnelle(s) équipée(s) de un ou plusieurs réacteur(s). Le procédé d'hydrocraquage selon l'invention peut avantageusement être mis en oeuvre dans un ou plusieurs réacteur(s) à lit fixe ou dans un ou plusieurs réacteur(s) à lit bouillonnant.

Une étape préalable d'hydrotraitement ou d'hydroraffinage de ladite charge hydrocarbonée est avantageusement mise en oeuvre dans le procédé d'hydrocraquage selon l'invention en amont d'au moins un catalyseur d'hydrocraquage décrit selon l'invention et permettant l'hydrocraquage de la charge. Ladite étape d'hydrotraitement ou d'hydroraffinage permet de réduire la teneur en soufre, en azote et en composés oxygénés présents dans la charge à traiter avant la mise en contact de ladite charge avec le catalyseur d'hydrocraquage placé en aval de manière à éviter sa désactivation.

Au moins un catalyseur d'hydrotraitement ou d'hydroraffinage peut avantageusement être utilisé dans ladite étape préalable d'hydrotraitement ou d'hydroraffinage. Ledit catalyseur d'hydrotraitement ou d'hydroraffinage, seul ou en association avec un autre catalyseur d'hydroraffinage classique, situé en amont du catalyseur décrit selon l'invention mis en oeuvre dans le procédé d'hydrocraquage selon l'invention, comprend avantageusement au moins un élément du groupe VIII et/ou au moins un élément du groupe VIB et éventuellement au moins un élément dopant choisi parmi le phosphore, le bore et le silicium et un support alumine ou silice alumine.

Dans un mode de réalisation préféré, ledit catalyseur décrit selon l'invention est avantageusement utilisé dans ladite étape préalable d'hydrotraitement ou d'hydroraffinage, ledit catalyseur utilisé dans ladite étape préalable d'hydrotraitement ou d'hydroraffinage pouvant être identique ou différent de celui utilisé dans le procédé d'hydrocraquage selon l'invention placé en aval et de préférence ledit catalyseur étant différent.

Dans le cas préféré où ledit catalyseur décrit selon l'invention est avantageusement utilisé dans ladite étape préalable d'hydrotraitement ou d'hydroraffinage, ledit catalyseur comprend une matrice mésostructurée constituée d'oxyde de silicium.

Dans un mode de réalisation préféré, le procédé d'hydrocraquage selon l'invention est mis en oeuvre dans un procédé dit en une étape. L'hydrocraquage dit en "une étape", comporte en premier lieu et de façon générale un hydroraffinage poussé qui a pour but de réaliser une hydrodéazotation et une hydrodésulfuration poussées de la charge avant que celle-ci ne soit envoyée sur le ou les catalyseurs d'hydrocraquage. Cet hydroraffinage poussé de la charge n'entraîne qu'une conversion limitée de la charge, en fractions plus légères, qui reste insuffisante et doit donc être complétée sur le(s) catalyseur(s) d'hydrocraquage plus actif(s). Cependant, aucune séparation des effluents n'intervient entre les deux types de catalyseurs : la totalité de l'effluent en sortie du lit catalytique d'hydroraffinage est injectée sur le ou les lit(s) catalytique(s) contenant le(s)dit(s) catalyseur(s) et ce n'est qu'ensuite qu'une séparation des produits formés est réalisée. L'hydrocraquage dit en "une étape" possède une variante qui présente un recyclage de la fraction non convertie vers au moins l'un des lits catalytiques d'hydrocraquage en vue d'une conversion plus poussée de la charge.

Dans un autre mode de réalisation préféré, le procédé d'hydrocraquage selon l'invention est mis en oeuvre dans un procédé dit en deux étapes. L'hydrocraquage dit en "deux étapes", comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape d'hydroraffinage subit ensuite une séparation, généralement par distillation, appelée le plus souvent séparation intermédiaire, qui a pour objectif de séparer les produits de conversion de la fraction non convertie. Dans la deuxième étape du procédé d'hydrocraquage en deux étapes, seule la fraction de la charge non convertie lors de la première étape, est traitée. Cette séparation permet au procédé d'hydrocraquage deux étapes d'être plus sélectif en distillat moyen (kérosène + diesel) que le procédé en une étape. En effet, la séparation intermédiaire des produits de conversion évite leur "sur-craquage" en naphta et gaz dans la deuxième étape sur le(s) catalyseur(s) d'hydrocraquage obtenu(s) selon le procédé de préparation décrit plus haut dans la présente description.

Conditions opératoires

Le procédé d'hydrocraquage selon l'invention est mis en oeuvre dans des conditions opératoires (température, pression, taux de recyclage d'hydrogène, vitesse spatiale horaire) pouvant être très variables en fonction de la nature de la charge, de la qualité des produits désirés et des installations dont dispose le raffineur. Le procédé d'hydrocraquage selon l'invention opère avantageusement à une température supérieure à 200°C, de préférence comprise entre 250 et 480°C, de manière préférée comprise entre 320 et 450°C et de manière plus préférée comprise entre 330 et 435°C, sous une pression supérieure à 1 MPa, de préférence comprise entre 2 et 25 MPa et de manière préférée comprise entre 3 et 20 MPa, la vitesse spatiale (débit volumique de charge divisé par le volume du catalyseur) étant comprise entre 0,1 et 20 $h^{-1}$, de préférence entre 0,1 et 6 $h^{-1}$, et de manière préférée entre 0,2 et 3 $h^{-1}$, et la quantité d'hydrogène introduite est telle que le rapport volumique litre d'hydrogène/litre d'hydrocarbure soit compris entre 80 et 5000l/l et de préférence entre 100 et 2000 l/l.

Ces conditions opératoires utilisées dans le procédé d'hydrocraquage selon l'invention permettent généralement d'atteindre des conversions par passe, en produits ayant des points d'ébullition d'au plus 370°C et avantageusement d'au plus 340°C, supérieures à 15% et de manière encore plus préférée comprises entre 20 et 95%.

Le procédé d'hydrocraquage selon l'invention couvre les domaines de pression et de conversion allant de l'hydrocraquage doux à l'hydrocraquage haute pression. On entend par hydrocraquage doux, un hydrocraquage conduisant à des conversions modérées, de préférence inférieures à 40%, et fonctionnant à basse pression, de préférence comprise entre 2 MPa et 10 MPa. On entend par hydrocraquage haute pression, un hydrocraquage conduisant à des conversions élevées, de préférence supérieures à 40%, et fonctionnant à pression élevée, de préférence comprise entre 10 MPa et 25 MPa.

Exemples

Les exemples qui suivent précisent l'invention sans toutefois en limiter la portée.

Exemple 1 : préparation d'un matériau aluminosilicique de rapport molaire Si/Al = 10 mésostructuré **A** de type AlSBA-15.

2,0 g de F127 ($PEO_{70}PPO_{106}PEO_{70}$) sont dispersés dans 75 ml d'une solution aqueuse d'acide chlorhydrique à 0,01 mol/l sous agitation. 3,89 g de tetraéthylorthosilicate ($Si(OEt)_4$, TEOS) sont ajoutés à la solution homogène et l'ensemble est laissé sous agitation à 40°C pendant 24 heures. 0,46 g d'$Al(O^tBu)_3$ sont ajoutés à la solution homogène et l'ensemble est laissé sous agitation à 40°C pendant 24 heures. La suspension ainsi obtenue est alors versée dans un autoclave tefloné de 250 ml et laissée à 100°C pendant 24 heures. Le solide est alors filtré. La poudre est ensuite séchée à l'air à 100°C puis calcinée à 550°C sous air pendant 4 h afin de décomposer les polymères et ainsi libérer la porosité. Le solide B présente des propriétés texturales (surface spécifique, volume poreux, diamètre de pores) respectivement de (703 $m^2$/g, 1,1 ml/g, 6,8 nm).

**Exemple 2 (non-conforme) :** préparation du catalyseur **B1** comparatif, de formulation **NiWP** à base de nickel, de tungstène et de phosphore déposée par imprégnation à sec du support aluminosilicique mésostructuré **A** d'une solution contenant l'hétéropolyacide de Keggin de formule $PW_{12}O_{40}^{3-}$ $3H^+$ ou acide phosphotungstique, puis par post-imprégnation d'un précurseur de nickel.

L'hétéropolyacide de Keggin de formule $PW_{12}O_{40}^{3-}$, $3H^+$ de chez Aldrich est solubilisé dans de l'eau. Le catalyseur B1 est préparé selon la méthode qui consiste à réaliser une imprégnation à sec du support aluminosilicate mésostructuré (support A) par une solution aqueuse contenant l'hétéropolyacide de Keggin de formule $PW_{12}O_{40}^{3-}$, $3H^+$ solubilisé.
Après une étape de maturation en vase clos à température ambiante, le support imprégné est séché à 120°C pendant 12 h sous flux d'air sec. Ledit support imprégné et séché est ensuite post-imprégné à l'aide de la méthode dite d'imprégnation à sec, par une solution nitrate de nickel $Ni(NO_3)_2$, $6H_2O$ diluée dans l'eau. La quantité de nickel est ajustée de façon à respecter le rapport molaire Ni/W = 0,4 .Cette post-imprégnation est suivie d'une étape de maturation de 12 heures puis de séchage à 120°C durant une nuit.
Les teneurs finales exprimées en % poids d'oxydes NiO, $WO_3$ et $P_2O_5$ sont respectivement de 3,2/25/0,63 de sorte que le rapport molaire Ni/W = 0,39. Le catalyseur B1 présente des propriétés texturales (surface spécifique, volume poreux, diamètre de pores) respectivement de (350 $m^2$/g, 0,7 ml/g, 7 nm).
Le catalyseur B1 obtenu a été analysé par spectroscopie Raman. Il révèle des bandes à 1011 et 987 $cm^{-1}$, ainsi que les bandes secondaires à 518 and 216 $cm^{-1}$ caractéristiques de l'hétéropolyanion de Keggin de formule $PW_{12}O_{40}^{3-}$ en accord avec les précédents résultats publiés par B. Qiu, X. Yi, L. Lin, W. Fang et H. Wan dans Catalysis Today, 2008, 131, 1-4, 2008, 464.

**Exemple 3 (conforme) :** préparation du catalyseur **B2** selon l'invention, de formulation **NiWP** comprenant l'hétéropolyacide de Keggin de formule $PW_{12}O_{40}^{3-}$ $3H^+$ ou acide phosphotungstique piégé dans une matrice aluminosilicique mésostructurée de ratio molaire Si/Al = 10.

0,1 g de CTAB et 2,0 g de P123 sont dissous dans 62,5 g d'une solution aqueuse d'acide chlorhydrique à 1,9 mol/l. 3,71 de TEOS et 0,44 g de $Al(O^tBu)_3$ sont alors ajoutés, puis le milieu est agité pendant 45 min. 0,348 g de l'hétéropolyacide de Keggin de formule $PW_{12}O_{40}^{3-}$, $3H^+$ de chez Aldrich dans 10 g de la même solution d'acide chlorhydrique sont ensuite ajoutés.
La solution colloïdale obtenue est ensuite laissée sous agitation pendant 20 heures à 40°C. La suspension est transvasée dans un autoclave téfloné pour un traitement à une température de 100°C pendant 24 heures. La suspension ainsi obtenue est alors filtrée puis le solide, après lavage avec 30 ml de la solution d'acide chlorhydrique à 1,9 mol/l et 60 ml d'eau distillée, est séché une nuit à l'étuve à 40°C. Le solide obtenu est alors calciné à une température palier de 490°C pendant 19 heures de manière à éliminer les tensioactifs et à libérer la mésoporosité dudit solide. Le solide obtenu est ensuite introduit dans un extracteur de type Soxhlet et le système est porté à reflux en présence de méthanol pendant 4 heures de manière à régénérer totalement l'hétéropolyanion décomposé lors de l'étape de calcination. Le solide est ensuite séché pour évacuer le solvant à une température de 90°C pendant 12 heures.
Le solide obtenu constitué de la matrice aluminosilicique mésostructurée comprenant l'hétéropolyanion de

Keggin de formule $PW_{12}O_{40}{}^{3-}$ piégé dans ses parois est alors imprégné à sec par une solution de nitrate de nickel puis séché à 120°C pendant 12 heures pour évacuer l'eau. Les teneurs finales exprimées en % poids d'oxydes NiO, $WO_3$ et $P_2O_5$ sont respectivement de 2,8/21,7/0,55 par rapport au solide final, de sorte que le rapport molaire Ni/W = 0,4. Le catalyseur B2 présente des propriétés texturales (surface spécifique, volume poreux, diamètre de pores) respectivement de (288 $m^2$/g, 0,9 ml/g, 9 nm).

Le catalyseur B2 obtenu a été analysé par spectroscopie Raman. Il révèle des bandes à 1012 et 989 $cm^{-1}$, ainsi que les bandes secondaires à 518 and 216 $cm^{-1}$ caractéristiques de l'hétéropolyanion de Keggin de formule $PW_{12}O_{40}{}^{3-}$ en accord avec les précédents résultats publiés par B. Qiu, X. Yi, L. Lin, W. Fang et H. Wan dans Catalysis Today, 2008, 131, 1-4, 2008, 464.

Exemple 4 (non-conforme) : préparation du catalyseur **C1** comparatif, de formulation **NiMoWP** à base de nickel, de molybdène, de tungstène et de phosphore déposée par imprégnation à sec du support aluminosilicique mésostructuré A d'une solution contenant l'hétéropolyanion de Keggin de formule $PMo_3W_9O_{40}{}^{3-}$ 3H⁺ et un précurseur de nickel.

Le tungstène, le molybdène et le nickel sont co-imprégnés à sec en milieu aqueux sur le support A (380 $m^2$/g). La solution d'imprégnation est préalablement préparée par mélange de $PW_{12}O_{40}{}^{3-}$, 3H⁺, de $MoO_3$ et d'$H_3PO_4$ mis sous reflux à 90°C dans l'eau pendant 3h, ce qui permet d'obtenir l'hétéropolyanion de Keggin de formule $PMo_3W_9O_{40}{}^{3-}$, 3H⁺ solubilisé dans la solution. A cette solution, on ajoute le $Ni_5(CO_3)_2(OH)_6$, $4H_2O$ de telle sorte que la quantité soit ajoutée pour obtenir un rapport Ni/(Mo+W) = 0,2. Après une maturation de 12 heures, le catalyseur est séché à 120°C pendant une nuit. Sur ce catalyseur non sulfuré NiMoWP/SiAl, la teneur massique en oxyde de tungstène est de 20%, la teneur massique en oxyde de molybdène est de 4% et la teneur massique en oxyde de nickel est de 1,8% et la teneur en oxyde de phosphore est de 0,7% par rapport à la masse totale de solide, ce qui correspond à un rapport Ni/(Mo+W) réel de 0,2.

Le catalyseur obtenu a été analysé par spectroscopie Raman. Il révèle des bandes principales à 1000, 986 et 978 $cm^{-1}$, ainsi que les bandes secondaires à 516, 236 et 222 $cm^{-1}$ caractéristiques de l'hétéropolyanion de Keggin de formule $PMo_3W_9O_{40}{}^{3-}$. Le catalyseur C1 présente des propriétés texturales (surface spécifique, volume poreux, diamètre de pores) respectivement de (360 $m^2$/g, 0,7 ml/g, 7 nm).

**Exemple 5 (conforme) :** préparation du catalyseur **C2** selon l'invention, de formulation **NiMoWP** comprenant l'hétéropolyanion $PMo_3W_9O_{40}{}^{3-}$ piégé dans une matrice aluminosilicate mésostructurée de ratio molaire Si/Al = 10.

0,040 g de trioxyde de molybdène $MoO_3$ sont dissouts dans une solution aqueuse de 0,009 g d'acide phosphorique $H_3PO_4$, puis 0,198 g de l'hétéropolyacide de Keggin de formule $PW_{12}O_{40}{}^{3-}$, 3H⁺ de chez Aldrich est ajouté à la solution. Après agitation durant 12 heures, la solution S1 limpide contenant l'hétéropolyanion de Keggin de formule $PMo_3W_9O_{40}{}^{3-}$ est obtenue.

0,1 g de CTAB et 2,0 g de P123 sont dissous dans 62,5 g d'une solution d'acide chlorhydrique à 1,9 mol/l. 3,71 g de TEOS et 0,44 g de Al(O$^t$Bu)$_3$ sont alors ajoutés, puis le milieu est agité pendant 45 min. La solution S1 préparée et contenant l'hétéropolyacide $PMo_3W_9O_{40}{}^{3-}$, 3H⁺ est ajoutée au mélange précédent.

La solution colloïdale obtenue est ensuite laissée sous agitation pendant 20 heures à 40°C. La suspension est transvasée dans un autoclave téfloné pour un traitement à une température de 100°C pendant 24 heures. La suspension ainsi obtenue est alors filtrée puis le solide, après lavage avec 30 ml de la solution d'acide chlorhydrique à 1,9 mol/l et 60 ml d'eau distillée, est séché une nuit à l'étuve à 40°C. Le solide obtenu est alors calciné à une température palier de 490°C pendant 19 heures de manière à éliminer les tensioactifs et à libérer la mésoporosité dudit solide. Le solide obtenu est ensuite introduit dans un extracteur de type Soxhlet et le système est porté à reflux en présence de méthanol pendant 4 heures de manière à régénérer totalement l'hétéropolyanion décomposé lors de l'étape de calcination. Le solide est ensuite séché pour évacuer le solvant à une température de 90°C pendant 12 heures.

Le solide obtenu constitué de la matrice aluminosilicate mésostructurée SBA-15 comprenant l'hétéropolyanion de Keggin de formule $PMo_3W_9O_{40}{}^{3-}$ piégé dans ses parois est alors imprégné à sec par une solution de nitrate de nickel puis séché à 120°C pendant 12 heures pour évacuer l'eau. Les teneurs finales exprimées en % poids d'oxydes NiO, $MoO_3$, $WO_3$ et $P_2O_5$ sont respectivement de 1,5/3,4/17//0,6 par rapport au solide final. Le catalyseur B2 présente des propriétés texturales (surface spécifique, volume poreux, diamètre de pores) respectivement de (301 $m^2$/g, 0,9 ml/g, 8,8 nm).

Le catalyseur obtenu a été analysé par spectroscopie Raman. Il révèle des bandes principales à 1000, 986 et 978 $cm^{-1}$, ainsi que les bandes secondaires à 516, 236 et 222 $cm^{-1}$ caractéristiques de l'hétéropolyanion de Keggin de formule $PMo_3W_9O_{40}{}^{3-}$.

Les formulations des catalyseurs sont décrites dans le tableau 1.

**Tableau 1 :** formulation des catalyseurs conformes et non conformes à l'invention

| Catalyseur | Support | NiO(% poids) | MoO$_3$ (% poids) | WO$_3$ (%poids) | P$_2$O$_5$ (% poids) | Ratio molaire Ni/(Mo+W) ou Ni/W |
|---|---|---|---|---|---|---|
| B1 (non conforme) | Imprégnation de PW$_{12}$O$_{40}$$^{3-}$, 3H$^+$ sur SiAl mésostructuré + post imprégnation de Ni | 3,2 | - | 25 | 0,63 | 0,39 |
| B2 (conforme) | PW$_{12}$O$_{40}$$^{3-}$, 3H$^+$ piégé dans une SiAl mésostructurée + post-imprégnation de Ni | 2,8 | - | 21,7 | 0,55 | 0,40 |
| C1 (non conforme) | Imprégnation de PMo$_3$W$_9$O$_{40}$$^{3-}$ et de Ni sur SiAl mésostructuré | 1,8 | 4 | 20 | 0,7 | 0,20 |
| C2 (conforme) | PMo$_3$W$_9$O$_{40}$$^{3-}$ piégé dans une SiAl mésostructurée + post-imprégnation de Ni | 1,5 | 3,4 | 17 | 0,6 | 0,20 |

Avant chargement sur unité, les catalyseurs sont conditionnés : les catalyseurs B1, C1, B2 et C2 se présentent en effet sous forme de poudre. Ces poudres sont mises en forme : elles sont pastillées, concassées pour ne garder que les particules de granulomérie comprise entre 1 et 2 mm.

**Exemple 6 :** Évaluation en hydrogénation du toluène en présence d'aniline des catalyseurs **B1** et **C1** (non-conformes) et **B2** et **C2** (conformes).

Le test d'Hydrogénation du Toluène en présence d'Aniline (test "HTA") a pour but d'évaluer l'activité HYDrogénante (HYD) des catalyseurs sulfurés supportés en présence d'H$_2$S et sous pression d'hydrogène. L'isomérisation et le craquage qui caractérisent la fonction acide d'un catalyseur d'hydrocraquage sont inhibés par la présence de NH$_3$ (suite à la décomposition de l'aniline) de sorte que le test HTA permette d'apprécier spécifiquement le pouvoir hydrogénant de chacun des catalyseurs testés. L'aniline et/ou NH$_3$ v(a)ont ainsi réagir via une réaction acide-base avec les sites acides du support. Chaque test HTA a été réalisé sur une unité comportant plusieurs microréacteurs en parallèle. Pour chaque test "HTA", la même charge est utilisée pour la sulfuration du catalyseur et pour la phase de test catalytique proprement dite. 4 cm$^3$ de catalyseur mélangés avec 4 cm$^3$ de carborundum (SiC, 500 μm) sont chargés dans les réacteurs.
La charge utilisée pour ce test est la suivante :

- Toluène 20% poids,
- Cyclohexane 73,62% poids,
- DMDS (DiMéthylDiSulfure) 5,88% poids (3,8% poids en S),
- Aniline 0,5% poids (750 ppm N).

Le catalyseur est chargé dans le réacteur sous sa forme oxyde, non active. L'activation (sulfuration) est effectuée dans l'unité avec cette même charge. C'est l'H$_2$S qui, formé suite à la décomposition du DMDS, sulfure la phase oxyde. La quantité d'aniline présente dans la charge a été choisie pour obtenir, après décomposition, environ 750 ppm de NH$_3$.
Les conditions opératoires du test d'hydrogénation du toluène sont les suivantes :

- P=6MPa,
- WH = 2 h$^{-1}$ (flux de charge = 8 cm$^3$/h),
- H$_2$/HC = 450 Nm$^3$/m$^3$ (flux H$_2$ = 3,6 Nm$^3$/m$^3$),
- T = 350°C.

Le pourcentage de toluène converti est mesuré et les résultats catalytiques sont exprimés en vitesse intrinsèque d'hydrogénation c'est-à-dire en nombre de molécules de toluène converties par atome de Mo+W et par heure.
L'activité du catalyseur B1 est prise pour référence et est égale à 100. Les résultats obtenus sont rassemblés dans le tableau 2.

**Tableau 2 :** vitesses intrinsèques d'hydrogénation relatives des catalyseurs B1, B2, C1 et **C2.**

| Catalyseur | Activité hydrogénante (base 100 pour le catalyseur B1) |
|---|---|
| B1 non-conforme (Imprégnation de $PW_{12}O_{40}{}^{3-}$, $3H^+$ sur SiAl mésostructuré=+ post imprégnation de Ni) | 100 |
| B2 conforme ($PW_{12}O_{40}{}^{3-}$, $3H^+$ piégé dans une SiAl mésostructurée + post-imprégnation de Ni) | 139 |
| C1 non-conforme (Imprégnation de $PMo_3W_9O_{40}{}^{3-}$ et de Ni sur SiAl mésostructuré) | 130 |
| C2 conforme ($PMo_3W_9O_{40}{}^{3-}$ piégé dans une SiAl mésostructurée + post-imprégnation de Ni) | 172 |

Les résultats figurant dans le tableau 2 démontrent que les catalyseurs B2 et C2 conformes à l'invention présentent une vitesse intrinsèque d'hydrogénation également nettement améliorée par rapport à celle respectivement des catalyseurs B1 et C1 préparés par voie d'imprégnation à sec auxquels ils sont directement comparables.

**Exemple 7 :** évaluation en hydrocraquage doux d'une coupe distillat sous vide des catalyseurs **C1** (non conforme) et **C2** (conforme)

La charge utilisée est une charge de type distillat sous vide "DSV" préalablement hydrotraitée à l'aide d'un catalyseur de formulation NiMoP supporté sur alumine commercialisée par la société Axens. Les caractéristiques principales de la charge sont reprises dans le tableau 3.

**Tableau 3 :** caractéristiques du DSV utilisé pour l'hydrocraquage doux.

| Charge | DSV |
|---|---|
| Densité 15/4 ($g/cm^3$) | 0,898 |
| S organique (% poids) | 0,2504 |
| N organique (ppm) | 351 |
| TMP* (°C) | 475 |
| % poids de composés ayant un point d'ébullition compris entre 340°C et 540°C | 85 |

* : **Température Moyenne Pondérée =** $\dfrac{1T_{5\%} + 2T_{50\%} + 4T_{95\%}}{7}$ avec $T_{x\%}$ correspondant à la température d'ébullition des x% poids de composés hydrocarbonés présents dans la coupe liquide.

Les catalyseurs C1 et C2 mis en forme sous forme de particules concassées de granulométrie comprise entre 1 et 2 mm sont successivement testés. Pour chaque test, 4 $cm^3$ de catalyseur est chargé dans le réacteur. L'activation (sulfuration) est effectuée dans l'unité réactionnelle avant démarrage du test avec une charge dite de sulfuration (gazole de distillation directe + 2% poids de DMDS). C'est l'$H_2S$ qui, formé suite à la décomposition du DMDS, sulfure les catalyseurs C1 et C2.
Les conditions opératoires appliquées lors du test en hydrocraquage doux sont les suivantes

- P = 6 MPa,
- VVH = 0,6 $h^{-1}$,
- $H_2/HC_{sortie}$ = 480 $Nm^3/m^3$,
- T = 390°C.

Les résultats catalytiques sont rassemblés dans le tableau 4. La conversion brute correspond à la conversion de la fraction hydrocarbonée ayant un point d'ébullition supérieur à 370°C présente dans la charge DSV initiale en des hydrocarbures ayant un point d'ébullition inférieur à 370°C et présents dans l'effluent. La conversion brute est déterminée comme étant égale à la fraction pondérale constituée par les hydrocarbures ayant un point d'ébullition inférieur à 370°C et présents dans l'effluent.

**Tableau 4 :** performances catalytiques obtenues pour C1 et C2 en hydrocraquage doux.

|  | Conversion brute (%) | Soufre Total dans l'effluent (ppm) |
|---|---|---|
| C1 (non conforme) | 39 | 27 |
| C2 (conforme) | 40 | 25 |

Le catalyseur C2 préparé selon l'invention et comprenant des hétéropolyanions piégés dans une matrice aluminosilicique mésostructurée présente une conversion de la coupe 370+ en la coupe 370- équivalente voire très légèrement supérieure et une activité hydrodésulfurante équivalente à celle du catalyseur C1 préparé par imprégnation à sec classique, alors que le catalyseur C2 contient 15% d'atomes de Mo et de W en moins par rapport au catalyseur C1. Ces résultats montrent que potentiellement, la phase active du catalyseur C2, issue de la sulfuration des hétéropolyanions piégés dans une matrice aluminosilicique mésostructurée, est mieux dispersée, générant ainsi un nombre de sites actifs par quantité de phase active sulfure plus important.

**Exemple 8 :** évaluation en hydrocraquage Haute Pression d'un distillat sous vide des catalyseurs **B1** et **B2**

Les catalyseurs B1 et B2 dont la préparation est décrite dans les exemples 1, 2 et 3 sont utilisés pour réaliser l'hydrocraquage d'un distillat sous vide non hydrotraité dont les principales caractéristiques sont fournies dans le tableau 5.

**Tableau 5 :** caractéristiques du distillat sous vide non hydrotraité.

| Densité à 15°C | 0,9217 |
|---|---|
| Soufre (% poids) | 2,5 |
| Azote (ppm poids) | 835 |
| % poids de composés ayant un point d'ébullition compris entre 340°C et 540°C | 85 |

Les catalyseurs B1 et B2 ont été mis en oeuvre selon le procédé de l'invention en utilisant une unité pilote comportant 1 réacteur à lit fixe traversé, les fluides circulent de haut en bas (down-flow).

Préalablement au test d'hydrocraquage, les catalyseurs sont sulfurés à 14 MPa, à 350°C au moyen d'un gasoil de distillation directe additionné de 2% poids de DMDS (diméthyl disulfure).

Après sulfuration, les tests catalytiques ont été effectués dans les conditions suivantes : pression totale : 14 MPa,

débit d'hydrogène : 1000 litres d'hydrogène gazeux par litre de charge injectée,

vitesse spatiale (WH) : 0,66 h$^{-1}$,

température : 400°C.

Les performances catalytiques sont exprimées en termes de conversion brute de la coupe 370+ (molécules dont le point d'ébullition est supérieur à 370°C) en la coupe 370- (molécules dont le point d'ébullition est inférieur à 370°C) et de sélectivité brute en distillats moyens (coupe 150-370°C). La conversion et la sélectivité sont exprimées à partir des résultats de distillation simulée et des analyses des gaz par chromatographie gazeuse.

La conversion brute en produits ayant un point d'ébullition inférieur à 370°C, notée CB 370°C, est prise égale au pourcentage massique de molécules dont le point d'ébullition est inférieur à 370°C dans les effluents CB 370°C = % de 370°C $^-$ effluents

La sélectivité brute en distillats moyens (coupe dont les points d'ébullition sont compris entre 150 et 370°C est notée SB DM et est prise égale à :

$$SB\ DM = [(fraction\ en\ 150 - 370\ _{effluents})]\ /\ [(\ \%\ de\ 370°C\ ^-\ _{effluents})]$$

Les performances catalytiques obtenues sont données dans le tableau 6 ci-après.

**Tableau 6 :** résultats catalytiques en hydrocraquage haute pression des catalyseurs **B1** et **B2**

| Catalyseur | CB 370°C (en %) | SB DM en % |
|---|---|---|
| B1 | 71 | 71 |
| B2 | 72 | 71 |

Les exemples précédents montrent donc tout l'intérêt d'utiliser un catalyseur selon l'invention pour réaliser l'hydrocraquage haute pression de charges hydrocarbonées de type distillat sous vide. En effet, le catalyseur selon l'invention permet d'obtenir des conversions élevées de la charge et des sélectivités en distillats moyens aussi intéressantes que celles du catalyseur B1 de référence, alors que le catalyseur B2 selon l'invention comprenant des hétéropolyanions piégés dans une matrice aluminosilicique mésostructurée contient 13% d'atomes de W en moins par rapport au catalyseur B1. Ces bonnes performances catalytiques sont attribuables à une meilleure dispersion de la phase active après sulfuration qui conduit à un gain en nombre de sites actifs dans le cas du catalyseur B2.

## Revendications

1.   Procédé d'hydrocraquage d'au moins une charge hydrocarbonée dont au moins 50% poids des composés présentent un point d'ébullition initial supérieur à 340°C et un point d'ébullition final inférieur à 540°C, mettant en oeuvre un catalyseur comprenant, sous sa forme oxyde, au moins un métal choisi parmi les métaux du groupe VIB, les métaux du groupe VIII et les métaux du groupe VB de la classification périodique, pris seuls ou en mélange, lesdits métaux étant présents sous forme d'au moins un polyoxométallate de formule $(H_hX_xM_mO_y)^{q-}$ dans laquelle X est un élément choisi parmi le phosphore (P), le silicium (Si), le bore (B), le nickel (Ni) et le cobalt (Co), ledit élément étant pris seul, M est un ou plusieurs élément(s) choisi(s) parmi le vanadium (V), le niobium (Nb), le tantale (Ta), le molybdène (Mo), le tungstène (W), le nickel (Ni) et le cobalt (Co), O estl'oxygène, H est l'hydrogène, h est un entier compris entre 0 et 12, x est un entier compris entre 0 et 4, m est un entier égal à 5, 6, 7, 8, 9, 10, 11, 12 et 18, y est un entier compris entre 17 et 72 et q est un entier compris entre 1 et 20, lesdits polyoxométallates étant présents au sein d'une matrice mésostructurée à base d'oxyde d'au moins un élément Y choisi dans le groupe constitué par le silicium, l'aluminium, le titane, le zirconium, le gallium, et le cérium et le mélange d'au moins un de ces éléments, ladite matrice ayant une taille de pore comprise entre 1,5 et 50 nm et présentant des parois amorphes d'épaisseur comprise entre 1 et 30 nm, lesdits polyoxométallates étant piégés dans lesdites parois de ladite matrice, ledit catalyseur étant sulfuré avant d'être mis en oeuvre dans ledit procédé.

2.   Procédé d'hydrocraquage selon la revendication 1 dans lequel ladite charge est une coupe distillat sous vide.

3.   Procédé d'hydrocraquage selon l'une des revendications 1 ou 2 dans lequel ladite charge hydrocarbonée de type distillat sous vide ou DSV est utilisée en mélange avec d'autres coupes hydrocarbonées choisies parmi les effluents issus d'une unité de craquage catalytique FCC, les gazoles légers issus d'une unité de craquage catalytique ou une huile de coupe lourde, les distillats provenant de procédés de désulfuration ou d'hydroconversion de résidus atmosphériques et/ou de résidus sous vide en lit fixe ou en lit bouillonnant, les effluents paraffiniques issus de la synthèse Fischer Tropsch, les effluents issus de la distillation sous vide, les huiles désalphaltées ou DAO, les effluents issus de procédé de liquéfaction du charbon, les charges issues de la biomasse ou les effluents provenant de la conversion de charges issues de la biomasse, et les extraits aromatiques et les charges provenant d'unités d'extraction d'aromatiques, prises seules ou en mélange.

4.   Procédé d'hydrocraquage selon l'une des revendications 1 à 3 dans lequel les polyoxométallates sont les composés répondant à la formule $(H_hX_xM_mO_y)^{q-}$ dans laquelle h est un entier compris entre 0 et 6, x est un entier pouvant être égal à 0, 1 ou 2, m est un entier égal à 5, 6, 7, 9, 10, 11 et 12, y est un entier compris entre 17 et 48 et q est un entier compris entre 3 et 12, X, M, H et O ayant la signification précitée.

5.   Procédé d'hydrocraquage selon l'une des revendications 1 à 4 dans lequel dans lequel les polyoxométallates utilisés sont choisis parmi les polyoxométallates de formule $PVMo_{11}O_{40}^{4-}$, $PV_2Mo_{10}O_{40}^{5-}$, $PV_3Mo_9O_{40}^{6-}$, $PV_4Mo_8O_{40}^{7-}$, $HPNiMo_{11}O_{40}^{6-}$, $P_2Mo_5O_{23}^{6-}$, $Ni_2Mo_{10}O_{38}H_4^{8-}$, $NiMo_6O_{24}H_6^{4-}$, $PMo_{12}O_{40}^{3-}$, $PW_{12}O_{40}^{3-}$, $PMo_3W_9O_{40}^{3-}$ et $PMo_6W_6O_{40}^{3-}$, pris seuls ou en mélange.

6.   Procédé d'hydrocraquage selon l'une des revendications 1 à 5 dans lequel les polyoxométallates sont les hétéropolyanions dits de Keggin de formule générale $XM_{12}O_{40}^{q-}$ pour lesquels le rapport m/x est égal à 12 et les hétéropolyanions dits de Keggin lacunaire de formule générale $XM_{11}O_{39}{}^{q-}$ pour lesquels le rapport m/x est égal à 11 et dans laquelle les éléments X et M et la charge q ont la signification précitée.

7. Procédé d'hydrocraquage selon la revendication 6 dans lequel les hétéropolyanions de Keggin sont choisis parmi les hétéropolyanions de formule $PW_{12}O_{40}{}^{3-}$ et $PMo_3W_9O_{40}{}^{3-}$ pris seul ou en mélange.

8. Procédé d'hydrocraquage selon l'une des revendications 1 à 7 dans lequel le catalyseur comprend une teneur massique totale en élément du groupe VIB exprimée en pourcentage poids d'oxyde par rapport à la masse totale du catalyseur comprise entre 2 et 35% poids.

9. Procédé d'hydrocraquage selon l'une des revendications 1 à 8 dans lequel le catalyseur comprend une teneur massique de l'élément du groupe VIII exprimée en pourcentage poids d'oxyde par rapport à la masse totale du catalyseur comprise entre 0,1 et 10% poids.

10. Procédé d'hydrocraquage selon l'une des revendications 1 à 9 dans lequel le catalyseur comprend une teneur massique en élément dopant choisi parmi le phosphore, le bore et le silicium exprimée en pourcentage poids d'oxyde par rapport à la masse totale du catalyseur comprise entre 0,1 et 10% poids.

11. Procédé d'hydrocraquage selon l'une des revendications 1 à 10 dans lequel ladite matrice mésostructurée est constituée d'un mélange d'oxyde de silicium et d'oxyde d'aluminium.

12. Procédé selon l'une des revendications 1 à 11 dans lequel ledit catalyseur sous sa forme oxyde présente une forme de chacune des particules élémentaires la constituant non sphérique.

13. Procédé selon l'une des revendications 1 à 12 dans lequel une étape préalable d'hydrotraitement ou d'hydroraffinage de ladite charge hydrocarbonée est mise en oeuvre dans ledit procédé d'hydrocraquage en amont d'au moins un catalyseur d'hydrocraquage.

14. Procédé selon l'une des revendications 1 à 13 dans lequel ledit procédé opère à une température supérieure à 200°C, sous une pression supérieure à 1 MPa, la vitesse spatiale étant comprise entre 0,1 et 20 $h^{-1}$, de préférence entre 0,1 et 6 $h^{-1}$, et la quantité d'hydrogène introduite est telle que le rapport volumique litre d'hydrogène/litre d'hydrocarbure soit compris entre 80 et 5000l/l.

**Patentansprüche**

1. Verfahren zum Hydrocracken mindestens einer Kohlenwasserstoffbeschickung, wovon mindestens 50 Gew.% der Verbindungen einen Anfangssiedepunkt größer 340 °C und einen Endsiedepunkt kleiner 540 °C aufweisen, wobei ein Katalysator in seiner Oxidform eingesetzt wird, der mindestens ein Metall umfasst, ausgewählt aus den Metallen der Gruppe VIB, den Metallen der Gruppe VIII und den Metallen der Gruppe VB des Periodensystems der Elemente, allein oder als Gemisch, wobei die Metalle in Form mindestens eines Polyoxometallats der Formel $(H_hX_xM_mO_y)^{q-}$ vorhanden sind, worin X für ein Element steht, ausgewählt aus Phosphor (P), Silicium (Si), Bor (B), Nickel (Ni) und Cobalt (Co), wobei das Element allein genommen wird, M für ein oder mehrere Element(e) steht, ausgewählt aus Vanadium (V), Niob (Nb), Tantal (Ta), Molybdän (Mo), Wolfram (W), Nickel (Ni) und Cobalt (Co), 0 für Sauerstoff steht, H für Wasserstoff steht, h für eine ganze Zahl im Bereich zwischen 0 und 12 steht, x für eine ganze Zahl im Bereich zwischen 0 und 4 steht, m für eine ganze Zahl gleich 5, 6, 7, 8, 9, 10, 11, 12 und 18 steht, y für eine ganze Zahl im Bereich zwischen 17 und 72 steht und q für eine ganze Zahl im Bereich zwischen 1 und 20 steht, wobei die Polyoxometallate innerhalb einer mesostrukturierten Matrix auf Basis eines Oxids mindestens eines Elements Y vorhanden sind, ausgewählt aus der Gruppe bestehend aus Silicium, Aluminium, Titan, Zircon, Gallium und Cer und dem Gemisch mindestens eines dieser Elemente, wobei die Matrix eine Porengröße im Bereich zwischen 1,5 und 50 nm hat und amorphe Wände mit einer Dicke im Bereich zwischen 1 und 30 nm aufweist, wobei der Katalysator mit Schwefel behandelt wird, bevor er in dem Verfahren eingesetzt wird.

2. Verfahren zum Hydrocracken nach Anspruch 1, wobei es sich bei der Beschickung um eine Vakuumdestillatfraktion handelt.

3. Verfahren zum Hydrocracken nach einem der Ansprüche 1 oder 2, wobei die Kohlenwasserstoffbeschickung vom Typ Vakuumdestillat oder DSV als Gemisch mit anderen Kohlenwasserstoffschnitten verwendet wird, ausgewählt aus den Abflüssen aus einer Einheit zum katalytischen Cracken FCC, leichten Gasölen aus einer Einheit zum katalytischen Cracken oder einem Öl aus einem schweren Schnitt, Destillaten, die aus Verfahren zur Entschwefelung oder Hydrokonversion von atmosphärischen Rückständen und/oder Vakuumrückständen im Festbett oder in brodelnder Wirbelschicht stammen, paraffinhaltigen Abflüssen aus der Fischer-Tropsch-Synthese, Abflüssen aus der Vakuumdestillation, deasphaltierten Ölen oder DAO, Abflüssen aus einem Kohleverflüssigungsverfahren, Beschickungen aus Biomasse oder Abflüssen, die aus der Umwandlung von Beschickungen aus Biomasse stammen, und Aromatenextrakten und Beschickungen, die aus Einheiten zur Aromatenextraktion stemmen, allein oder als Gemisch.

4. Verfahren zum Hydrocracken nach einem der Ansprüche 1 bis 3, wobei es sich bei den Polyoxometallaten um Verbindungen handelt, die der Formel $(H_hX_xM_mO_y)^{q-}$ entsprechen, worin h für eine ganze Zahl im Bereich zwischen 0 und 6 steht, x für eine ganze Zahl steht, die gleich 0, 1 oder 2 sein kann, m für eine ganze Zahl gleich 5, 6, 7, 9, 10, 11 und 12 steht, y für eine ganze Zahl im Bereich zwischen 17 und 48 steht und q für eine ganze Zahl im Bereich zwischen 3 und 12 steht, wobei X, M, H und 0 die vorgenannte Bedeutung haben.

5. Verfahren zum Hydrocracken nach einem der Ansprüche 1 bis 4, wobei wobei die verwendeten Polyoxometallate ausgewählt sind aus den Polyoxometallaten der Formel $PVMo_{11}O_{40}^{4-}$, $PV_2Mo_{10}O_{40}^{5-}$, $PV_3Mo_9O_{40}^{6-}$, $PV_4Mo_8O_{40}^{7-}$, $HPNiMo_{11}O_{40}^{6-}$, $P_2Mo_5O_{23}^{6-}$, $Ni_2Mo_{10}O_{38}H_4^{8-}$, $NiMo_6O_{24}H_6^{4-}$, $PMo_{12}O_{40}^{3-}$, $PW_{12}O_{40}^{3-}$, $PMo_3W_9O_{40}^{3-}$ und $PMo_6W_6O_{40}^{3-}$, allein oder als Gemisch.

6. Verfahren zum Hydrocracken nach einem der Ansprüche 1 bis 5, wobei es sich bei den Polyoxometallaten um Heteropolyanionen mit der so genannten Keggin-Struktur der allgemeinen Formel $XM_{12}O_{40}^{q-}$, für die das Verhältnis m/x gleich 12 ist, und um Heteropolyanionen mit der so genannten Keggin-Defektstruktur der allgemeinen Formel $XM_{11}O_{39}^{q-}$ handelt, für die das Verhältnis m/x gleich 11 ist, und wobei die Elemente X und M und die Ladung q die vorgenannte Bedeutung haben.

7. Verfahren zum Hydrocracken nach Anspruch 6, wobei die Keggin-Heteropolyanionen ausgewählt sind aus den Heteropolyanionen der Formel $PW_{12}O_{40}^{3-}$ und $PMo_3W_9O_{40}^{3-}$, allein oder als Gemisch.

8. Verfahren zum Hydrocracken nach einem der Ansprüche 1 bis 7, wobei der Katalysator einen Gesamtmassegehalt des Elements der Gruppe VIB, ausgedrückt als prozentualer Gewichtsanteil des Oxids bezogen auf die Gesamtmasse des Katalysators, im Bereich zwischen 2 und 35 Gew.% umfasst.

9. Verfahren zum Hydrocracken nach einem der Ansprüche 1 bis 8, wobei der Katalysator einen Gesamtmassegehalt des Elements der Gruppe VIII, ausgedrückt als prozentualer Gewichtsanteil des Oxids bezogen auf die Gesamtmasse des Katalysators, im Bereich zwischen 0,1 und 10 Gew.% umfasst.

10. Verfahren zum Hydrocracken nach einem der Ansprüche 1 bis 9, wobei der Katalysator einen Gesamtmassegehalt des dotierenden Elements, ausgewählt aus Phosphor, Bor und Silicium, ausgedrückt als prozentualer Gewichtsanteil des Oxids bezogen auf die Gesamtmasse des Katalysators, im Bereich zwischen 0,1 und 10 Gew.% umfasst.

11. Verfahren zum Hydrocracken nach einem der Ansprüche 1 bis 10, wobei die mesostrukturierte Matrix aus einem Gemisch aus Siliciumoxid und Aluminiumoxid besteht.

12. Verfahren nach einem der Ansprüche 1 bis 11, wobei der Katalysator in seiner Oxidform eine Form von jedem der nicht-kugelförmigen Elementarteilchen, aus denen er besteht, aufweist.

13. Verfahren nach einem der Ansprüche 1 bis 12, wobei ein vorausgehender Schritt zur Hydrobehandlung oder zur Hydroraffination der Kohlenwasserstoffbeschickung in dem Verfahren zum Hydrocracken stromaufwärts mindestens eines Hydrocracking-Katalysators eingesetzt wird.

14. Verfahren nach einem der Ansprüche 1 bis 13, wobei das Verfahren bei einer Temperatur größer 200 °C, unter einen Druck größer 1 MPa arbeitet, wobei die Raumgeschwindigkeit im Bereich zwischen 0,1 und 20 $h^{-1}$, bevorzugt zwischen 0,1 und 6 $h^{-1}$ liegt und die eingeführte Menge an Wasserstoff derart ist, dass das Volumenverhältnis Liter Wasserstoff/Liter Kohlenwasserstoff im Bereich zwischen 80 und 5.000 1/1 liegt.

**Claims**

1. Process for the hydrocracking of at least one hydrocarbon-containing feedstock, in which at least 50% by weight of the compounds have an initial boiling point above 340°C and a final boiling point below 540°C, using a catalyst comprising, in its oxide form, at least one metal selected from the metals of group VIB, the metals of group VIII and the metals of group VB of the periodic table, used alone or in a mixture, said metals being present in the form of at least one polyoxometallate of formula $(H_hX_xM_mO_y)^{q-}$ in which X is an element selected from phosphorus (P), silicon (Si), boron (B), nickel (Ni) and cobalt (Co), said element being used alone, M is one or more element(s) selected from vanadium (V), niobium (Nb), tantalum (Ta), molybdenum (Mo), tungsten (W), nickel (Ni) and cobalt (Co), O is oxygen, H is hydrogen, h is an integer comprised between 0 and 12, x is an integer comprised between 0 and 4, m is an integer equal to 5, 6, 7, 8, 9, 10, 11, 12 or 18, y is an integer comprised between 17 and 72 and q is an integer comprised between 1 and 20, said polyoxometallates being present within a mesostructured matrix based on oxide of at least one element Y selected from the group constituted by silicon, aluminium, titanium, zirconium, gallium, and cerium and a mixture of at least one of these elements, said matrix having a pore size comprised between 1.5 and 50 nm and having amorphous walls of thickness comprised between 1 and 30 nm, said catalyst being sulphurized before being used in said process.

2. Hydrocracking process according to claim 1, in which said feedstock is a vacuum distillate cut.

3. Hydrocracking process according to one of claims 1 or 2, in which said hydrocarbon-containing feedstock of the vacuum distillate type or VD is used mixed with other hydrocarbon cuts selected from effluents originating from a catalytic cracking unit FCC, light gas oils originating from a catalytic cracking unit or a heavy oil cut, distillates originating from fixed bed or ebullating bed processes of desulphurization or of hydroconversion of atmospheric residues and/or of vacuum residues, paraffinic effluents originating from Fischer-Tropsch synthesis, effluents originating from vacuum distillation, deasphalted oils or DAO, effluents originating from a coal liquefaction process, feedstocks originating from biomass or effluents derived from conversion of feedstocks obtained from biomass, and aromatic extracts and feedstocks obtained from units for extraction of aromatics, used alone or in a mixture.

4. Hydrocracking process according to one of claims 1 to 3, in which the polyoxometallates are the compounds corresponding to the formula $(H_hX_xM_mO_y)^{q-}$, in which h is an integer comprised between 0 and 6, x is an integer that can be equal to 0, 1 or 2, m is an integer equal to 5, 6, 7, 9, 10, 11 or 12, y is an integer comprised between 17 and 48 and q is an integer comprised between 3 and 12, X, M, H and O having the meaning given above.

5. Hydrocracking process according to one of claims 1 to 4, in which the polyoxometallates used are selected from the polyoxometallates of formula $PVMo_{11}O_{40}^{4-}$, $PV_2Mo_{10}O_{40}^{5-}$, $PV_3Mo_9O_{40}^{6-}$, $PV_4Mo_8O_{40}^{7-}$, $HPNiMo_{11}O_4^{6-}$, $P_2Mo_5O_{23}^{6-}$, $Ni2Mo_{10}O_{38}H_4^{8-}$, $NiMo_6O_{24}H_6^{4-}$, $PMo_{12}O_{40}^{3-}$, $PW_{12}O_{40}^{3-}$, $PMo_3W_9O_4^{3-}$ and $PMo_6W_6O_{40}^{3-}$, used alone or in a mixture.

6. Hydrocracking process according to one of claims 1 to 5, in which the polyoxometallates are the so-called Keggin heteropolyanions of general formula $XM_{12}O_{40}^{q-}$ for which the m/x ratio is equal to 12 and the so-called lacunary Keggin heteropolyanions of general formula $XM_{11}O_{39}^{q-}$ for which the m/x ratio is equal to 11, and in which the elements X and M and the charge q have the meaning given above.

7. Hydrocracking process according to claim 6, in which the Keggin heteropolyanions are selected from the heteropolyanions of formula $PW_{12}O_{40}^{3-}$ and $PMo_3W_9O_{40}^{3-}$, used alone or in a mixture.

8. Hydrocracking process according to one of claims 1 to 7, in which the catalyst comprises a total content by weight of group VIB element expressed in percentage by weight of oxide relative to the total weight of the catalyst between 2 and 35% by weight.

9. Hydrocracking process according to one of claims 1 to 8, in which the catalyst comprises a content by weight of the group VIII element expressed in percentage by weight of oxide relative to the total weight of the catalyst between 0.1 and 10% by weight.

10. Hydrocracking process according to one of claims 1 to 9, in which the catalyst comprises a content by weight of doping element selected from phosphorus, boron and silicon expressed in percentage by weight of oxide relative to the total weight of the catalyst between 0.1 and 10% by weight.

11. Hydrocracking process according to one of claims 1 to 10, in which said mesostructured matrix is constituted by a mixture of silicon oxide and aluminium oxide.

12. Process according to one of claims 1 to 11, in which said catalyst has, in its oxide form, a non-spherical shape of each of the elementary particles of which it is constituted.

13. Process according to one of claims 1 to 12, in which a preliminary step of hydrotreating or of hydrorefining of said hydrocarbon-containing feedstock is applied in said hydrocracking process upstream of at least one hydrocracking catalyst.

14. Process according to one of claims 1 to 13, in which said process takes place at a temperature above 200°C, at a pressure above 1 MPa, the space velocity being between 0.1 and 20 $h^{-1}$, preferably between 0.1 and 6 $h^{-1}$, and the quantity of hydrogen introduced is such that the volume ratio litre of hydrogen/litre of hydrocarbon is between 80 and 5000 I/I.

**EP 2 655 554 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2935139
- US 2547380 A
- FR 2749778
- FR 2764211

**Littérature non-brevet citée dans la description**

- **J. SCHERZER ; A. J. GRUIA.** Hydrocracking Science and Technology. Marcel Dekker Inc, 1996
- **B. S. CLAUSEN ; H. T. TOPSØE ; F. E. MASSOTH.** Catalysis Science and Technology. Springer-Verlag, 1996, vol. 11
- Heteropoly and Isopoly Oxométallates. Springer-Verlag, 1983
- **A. GRIBOVAL ; P. BLANCHARD ; E. PAYEN ; M. FOURNIER ; J. L. DUBOIS.** *Chem. Lett.,* 1997, vol. 12, 1259
- **L. G. A. VAN DE WATER ; J. A. BERGWERFF ; B. R. G. LELIVELD ; B. M. WECKHUYSEN ; K. P. DE JONG.** *J. Phys. Chem. B,* 2005, vol. 109, 14513
- **D. SOOGUND ; P. LECOUR ; A. DAUDIN ; B. GUICHARD ; C. LEGENS ; C. LAMONIER.** *E. Payen dans Appl. Catal. B,* 2010, vol. 98 (1), 39
- **W-C. CHENG ; N. P. LUTHRA.** *J. Catal.,* 1988, vol. 109, 163
- **J. A. BERGWERFF ; T. VISSER ; B. R. G. LELIVELD ; B. D. ROSSENAAR ; K. P. DE JONG ; B. M. WECKHUYSEN.** *Journal of the American Chemical Society,* 2004, vol. 126 (44), 14548
- **G. J. DE A. A. SOLER-IIIIA ; C. SANCHEZ ; B. LEBEAU ; J. PATARIN.** *Chem. Rev.,* 2002, (102), 4093
- **J. S. BECK ; J. C. VARTULI ; W. J. ROTH ; M. E. LEONOWICZ ; C. T. KRESGE ; K. D. SCHMITT ; C. T.-W. CHU ; D. H. OLSON ; E. W. SHEPPARD ; S. B. MCCULLEN.** *J. Am. Chem. Soc.,* 1992, vol. 114 (27), 10834
- **S. FÖRSTER ; M. ANTIONNETTI.** *Adv. Mater,* 1998, vol. 10, 195
- **S. FÖRSTER ; T. PLANTENBERG.** *Angew. Chem. Int. Ed,* 2002, vol. 41, 688
- **H. CÖLFEN.** *Macromol. Rapid Commun,* 2001, vol. 22, 219
- **B. QIU ; X. YI ; L. LIN ; W. FANG ; H. WAN.** *Catalysis Today,* 2008, vol. 131 (1-4), 464